Europäisches Patentamt

European Patent Office

Office européen des brevets

(11) Publication number: **0 033 240**
**B1**

(12) **EUROPEAN PATENT SPECIFICATION**

(45) Date of publication of patent specification: **30.07.86**

(21) Application number: **81300321.7**

(22) Date of filing: **23.01.81**

(51) Int. Cl.⁴: **G 06 K 17/00,** G 06 K 19/08, H 04 N 5/83

(54) Optical data storage.

(30) Priority: **24.01.80 GB 8002418**

(43) Date of publication of application:
**05.08.81 Bulletin 81/31**

(45) Publication of the grant of the patent:
**30.07.86 Bulletin 86/31**

(84) Designated Contracting States:
**AT BE CH DE FR GB IT LI LU NL SE**

(56) References cited:
FR-A-1 342 488
GB-A- 902 397
GB-A-1 091 981
US-A-3 307 020
US-A-3 732 363
US-A-3 818 500
US-A-3 870 814
US-A-3 885 867
US-A-4 179 743

RESEARCH DISCLOSURE, no. 186, October 1979 HAMPSHIRE (GB) HOWE and EDWARDS: "Document storage on a video disc" pages 568 to 570

I.E.E.E. SPECTRUM, August 1979 NEW YORK (US) "Ten billion bits on a disk" pages 26 to 33

(73) Proprietor: **MNEMOS RESEARCH NV**
**c/o Holland Intertrust (Antilles) N.V. De**
**Ruyterkade 58A**
**Curacao Netherlands Antilles (NL)**

(72) Inventor: **Pettigrew, Robert Martin**
**Pound Cottage High Street**
**Foxton Cambridgeshire (GB)**
Inventor: **Bradbrook, John Douglas**
**56 Downlands**
**Royston Hertfordshire (GB)**
Inventor: **Wainwright, Ronald Corbett**
**18 Walkern Road**
**Stevenage Hertfordshire (GB)**

(74) Representative: **Godsill, John Kenneth et al**
**Hazlitt House 28 Southampton Buildings,**
**Chancery Lane**
**London, WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to optical data storage systems, optical data storage members and optical data reading apparatus for such members, and is particularly applicable to data bases.

Two entirely different optical data storage systems have found commercial acceptance, one employing microfilm and the other employing optical laser storage methods.

In microfilm systems, high capacity optical data storage is effected photographically on light-sensitive microfilms, such as microfiche. Capacities of up to 10 million bits/mm² have been achieved, the miximum being limited by the quality of the photographic emulsions available. The production of microfilms for a very high capacity system is therefore very expensive. Moreover, some data bases (e.g. automobile part catalogues) require large numbers of identical copies, so that the expense of reproducing such microfilms has to be taken into account. On the other hand, a microfilm reader is relatively inexpensive as it does not rely on laser illumination and can employ a relatively cheap optical imaging system. Nevertheless, it can be a time consuming operation to locate desired information on microfilm, although this problem has been alleviated to some extent by the use of microfiche, which involves reproducing a large number of pages of data on a single sheet which can be searched manually in two dimensions.

Optical laser storage systems using discs have been made wherein data is stored in the form of a coded series of pits in concentric rings, or spirals, on the surface of a transparent disc. The data is read using a source of coherent laser illumination focused on each of the pits in turn as the disc is rotated. The spot size of the illumination must be less than or comparable to the area of a single pit.

The light defracted by the pits, either on reflection or in transmission, is monitored and is used to reconstruct electronically an image of the stored data. The data in this case is necessarily encoded and so is not directly readable, requiring the use of electronic decoders to convert the stored data into signals suitable for a video display unit. Such a system makes it possible to produce very good random-access times. One such system is described on pages 26 to 33 of IEEE Spectrum of August 1979. In that system each set of information is accompanied by an address heading and it is possible to use this address heading to locate information on the disc. This system for location is efficient in that context, where the data is digitally encoded is read serially whilst the disc is spinning at high speed. Such a system, attaching a heading to each item of data, takes up space on the disc and would not clearly be efficient in microfilm-type applications.

A disc system has been proposed with which it is possible to image optical data without the use of laser light, somewhat in the manner of microfilm or microfiche. Such a system is disclosed in British Patent Specification No. 10191981 and comprises the use of a disc having a spiral groove and between the turns of the groove a flat spiral land having a coating of photographic emulsion constituting a video track. A reading head is employed which has a pick-up which physically engages the groove for the purposes of accurately locating the reading head relative to the video track. Video data is recorded on the track so that a flying spot scanner can scan picture elements in a linear fashion.

For this purpose the reading head incorporates a light source and lens enabling an image of the video track to be passed along the recording head to a flying spot type pick-up tube. No method is provided for random-access as it is believed that the system of that specification is intended for sequential reproduction of images as in a video player.

An alternative approach is found in U.S. Specification No. 4179743 disclosing apparatus for reading rectangular microfiche. Pages of data are arrayed on the fiche and each page has physically adjacent to it a bar code defining the content of the page. The pages are necessarily all ordered with regard to their data content. Random access is then possible in the sense that rows and columns of bar codes can be scanned to find that containing information corresponding to that sought. The apparatus will then display the associated page. This system requires ordered data, i.e. pages of a dictionary or the like, otherwise data cannot be located. Also the bar codes must be distributed throughout the fiche, one for each page, these consuming space that would otherwise be used for data pages.

An object of the present invention is to provide an optical data storage member and system which does not rely on laser light, but which is capable of efficient random access regardless of whether or not the data is ordered.

According to one aspect of the present invention there is provided an optical data storage member which is a substantially planar member comprising a first, information storage, zone for the storage of information in individual unit areas of the zone which areas can be individually optically imaged by non-laser light, and a second, control, zone or zones distinct from the first zone and which stores machine readable control data for use in accessing the individual unit areas of the first zone, characterised in that, in order to provide random access to any one of a multiplicity of positions of a two-dimensional array of positions within the information storage zone, the storage member has a two-co-ordinate addressing system defined by the second zone or zones and comprising (a) means defining an absolute address of the storage member in one of the co-ordinate directions and a reference position in the other, and (b) means providing distance data in both co-ordinate directions for use in measuring travel distances relative to the absolute address and reference position, said providing means comprising a control track extending in one co-ordinate direction of the addressing system and providing an incremental scale for use in measuring incremental travel distances relative to the absolute address independently of the position and content of any data within said first zone.

The second zone, defining the co-ordinate system, and the first zone, to contain pages, are thus distinct. The co-ordinate system is external to the first zone but nevertheless can define a two-dimensional array of addresses throughout the first zone, so that a page can be located substantially anywhere in the first zone and thus have an address defined by the co-ordinate system. One is therefore not limited by an ordered array of bar codes. Thus, the second zone or zones can be designed to define any one of a multiplicity of positions in a two dimensional array of positions within the first zone, all regardless of the data content of individually imageable areas or pages placed in the first zone. The incremental scale can be so fine as to define a unit of measurement so small that the length of one side of an individually imageable area or page is not less than a plurality of such units. In other words, by using an incremental scale physically on the storage member, one can finely measure position across the first zone by incremental travel measurement to reach a desired position or address accurately.

In accordance with a second aspect of the invention, there is provided an optical data storage apparatus comprising light-directing means for directing non-coherent light at distinct areas of a substantially planar data storage member having at least one first zone for storing optically readable data and at least one second zone distinct from the or each first zone and defining accessing data, drive means for producing relative motion between the light-directing means and the storage member, input means for defining a desired area of the first zone or zones, reading means for reading said accessing data, and control means for controlling the drive means in dependence upon the accessing data read by the reading means to cause the light-directing means and storage member to be positioned relatively to one another to cause light to be directed over the desired area, characterised in that the control means are operable to derive from the input means the co-ordinates of the defined desired area in a two-co-ordinate system of the storage member, the control means further being operable (a) to obtain absolute positional data defining a datum in a first and second co-ordinate direction of said two-co-ordinate system of the storage member from the accessing data read from the storage member, said accessing data being provided by means defining an absolute address of the storage member in one direction and a reference position in the other and means for providing distance data in both co-ordinate directions, and (b) to control the operation of the drive means to produce said relative motion as increments of motion relative to the datum measured by means including an incremental scale of, and extending in one co-ordinate direction of, the storage member, thereby to reach a position, as defined in said two-co-ordinate system, corresponding to the co-ordinates of said desired area.

One preferred embodiment is based on a disc-shaped storage member having a polar co-ordinate system. Then, the second zone or zones preferably comprise a first annular track containing absolute angular position data and a second annular track providing incremental angular data and which may be used to control a fine angular motion of the storage member relative to the light directing means from an angular position already known from the first annular track. The first annular track is preferably arranged to be read by means utilising at least a portion of the optical system of the light directing means. Thus, this track may be the innermost zone or at or near the periphery of the storage member so as to be substantially in a given innermost or outer radial position. The second track is preferably arranged to be read by a fixed transducer, e.g. a moire fringe transducer, this second track therefore preferably being at or near the periphery of the storage member. Utilising these two tracks, it is possible to position the light directing means very accurately relative to the storage member on a given angular co-ordinate thereof. As an initial step, the control means would cause the light directing means to be driven to the first track whilst the disc is rotating so that the light directing means can be used to read the absolute angular position, halting the disc at the desired absolute position. Any further relative rotation of the disc and the light directing means can then be accomplished by subsequent use of the fixed transducer reading the incremental second track.

For radial servo-control, the means providing radial position data may comprise radially extending tracks conveying radial incremental data, whereby radial position can be measured and controlled relative to a fixed radial position, e.g. the fixed, known radial position of the absolute angular position data track. Such radial tracks are preferably also read by means of the light directing means, utilising, for example, a further moire fringe transducer carried by those means.

Alternatively to an angular co-ordinate system, a cartesian two-co-ordinate system may be used.

Accordingly, when reference is made herein to circumferential and radial tracks, such references can also be applied, where applicable, to tracks in the two orthogonal directions of a cartesian system.

All the data in the second zone or zones may be stored in the form of amplitude-modulation of the relief height of a pattern of surface relief variations, the data being readable in at least one diffraction order by illuminating the second zone or zones with non-coherent light. The pattern of surface relief variations is designed so that, without modulation, its image is substantially "black" in one diffraction order, amplitude-modulation of that pattern causing the image in corresponding areas to lighten in that same diffraction order, preferably the zero order. Such a method of storing data has been disclosed, for example, in United States Patent Specification No. 3732363 which describes the application of relief patterns to the production of images in a microfilm-type system. British Specification No. 902397 also discloses such a method of recording as applicable to a disc, but in all cases the information recorded is fundamentally analog data to be displayed to the user rather than control data for use in random access to the analog data.

It will be apparent that storing data by means of modulation of a relief pattern is advantageous compared to photographic emulsion storage as it does not absorb light and therefore no potentially damaging heat is generated during reading. Data stored on the member in this way does not fade with age, nor need it wear away with use as no contact is made with the surface during reading and a protective cover may be provided permanently or for storage purposes. Another major advantage with this method of storing control data is its ease of reproduction. Once a corresponding metal master disc has been produced multiple copies can be produced very cheaply on thermoplastic sheets or discs by an embossing process.

It will also be apparent that the information storage (first) zone or zones of the storage member can also have data stored on them by the same technique, this data also being incorporated in the metal masters for embossing with the control data. In this way an analog data base can be reproduced a large number of times very cheaply, and at the same time it will be appreciated that the reading apparatus required can be relatively inexpensive firstly because laser illumination is not required and secondly because positional control is simplified by the use of the second zone or zones conveying positional information for the first zone or zones. In particular, positional tolerances are by no means as severe as with known optical laser storage systems. Not only can laser illumination be avoided but the source luminance required is very low compared to known laser storage systems.

A further advantage over optical laser storage systems is that the information can be stored in the information zones in a manner analogous to microfilm technology, i.e. as a plurality of individual pages of analog images each of which can be viewed in its entirety at any one moment by the optical system of a reading head and whilst the storage member and reading head are stationary with respect to one another. In view of the fact that the images can be read whilst the storage member and reading head are stationary, one obviates the need for fast motors and for complex and expensive tracking error correction equipment which is needed for optical laser storage systems.

It will also be apparent that because pages of data can be recorded on the storage member so as to be directly readable and optically projected on to, say, a screen, one also obviates the need for expensive electronic decoders. Not only can one store alphanumeric information in this way but graphical information may also be recorded and reproduced accurately with known digital techniques.

Nevertheless, data may be encoded and stored digitally on the information storage zones of the storage member if a user requires it, the storage member then acting as a digital read-only-memory.

As indicated above, a disc storage member can be provided as an embossed thermoplastics disc bearing as a modulated relief pattern not only control data but simultaneously a large number of pages of analog data.

Another interesting possibility is to supply storage members to users with the embossed control data zones, but leaving the information data zones free for the user to record his own data on the storage member in any way he requires, even photographically.

In one embodiment the storage members also have stored on them one or more further tracks, these containing digital data, which may be recorded by a modulated relief pattern as described above. The digital information in such a track or tracks may take a variety of forms, in particular may define an index to the addresses of "pages" of data recorded in the first zone or zones. The digital data may furthermore include control data defining the type of storage member, e.g. defining to a reading apparatus whether such indexing data is present, the address of a menu page or 'first' page and so forth. Such data may automatically control the apparatus, e.g. to display the menu or 'first' page immediately on loading the disc. A track or tracks may also contain programming information instructing the apparatus in other ways as to its mode of operation.

Digital data stored in a track or tracks of the storage member is preferably in the form of a series of digital characters or words succeeding one another circumferentially along the track, each such character or word comprising a set of bits which succeed one another in the radial direction. The optical system of the reading head can thus project at least one character or word onto, for example, an array of photo-sensitive elements which can effect a parallel read-out of that character or word. Thus, whilst such data is in one sense read serially as in known laser storage systems, the present apparatus in fact reads a series of multi-bit characters, which are individually read in parallel rather than as individual bits of data.

A further feature of such digital track or tracks in a preferred embodiment is the provision of a guard band on one or both sides of the track, the band again preferably being an embossed relief pattern and itself providing radial positional information for aligning the reading head with the digital track concerned. A plurality of such bands could also be provided to constitute the means providing radial position data referred to above, e.g. instead of radial tracks.

A guard band may also be read for one complete revolution to provide a measure of eccentricity which can be used as a compensation during servo-control of the reading head and storage member.

With regard to the control means, this preferably comprises two motors, one for radial positioning and the other for rotational positioning. Each has a servo system operable as follows.

Firstly the input data defining a required position is analysed to calculate the desired angular and radial co-ordinates. The values are desired value inputs to the two servo systems. From the control data on the storage member, the actual co-ordinates are known of the reading head position relative to the storage member, and from these the 'error' or desired travel is calculated. A two stage process is then effected in each co-ordinate direction.

Firstly a coarse drive is applied to tend to reduce the 'error' to zero until a 'window' around the final target is found. Then a fine control is effected, using incremental radial or angular control data to drive the corresponding motor in a stepping mode to the final position. Knowing the desired travel, a predetermined acceleration-deceleration pattern can be precalculated in dependence upon the 'error' for the coarse control.

Thus, the servo means may comprise calculating means arranged to provide an acceleration phase in which the motor is driven by substantially constant voltage until it is detected that a calculated position, dependent upon said difference, has been reached, followed by a deceleration phase in which the motor is driven by a deceleration voltage which is recalculated at the beginning of each of a plurality of sampling periods by the calculating means in dependence upon the instantaneous value of said difference and its rate of change.

Microprocessor technology is preferably employed to effect this servo-control.

A further aspect of the preferred embodiment concerns optical focussing and storage member support. As proposed above, the storage members may be cheaply reproduced thermoplastics discs. As these are effectively floppy discs, support and focussing of the imaged data is a problem. The above-mentioned IEEE Spectrum article discloses an expensive optical system using a polarizing beam splitter and semitransparent mirror for obtaining illumination, tracking error data, the data signal and focussing error signal. The latter signal is employed for focussing control.

In the preferred embodiment of the present invention, an air bearing is used for support and for focussing control.

Preferably the air bearing is adjustable and, furthermore, it may have means for creating air pressure on both sides of the member, to support the member between two thrust pads.

For a better understanding of the invention and to show how the same may be carried into effect, reference will now be made, by way of example, to the accompanying drawings, in which:

Figure 1 shows a schematic view in plan of a data storage member;

Figure 2 is a schematic view in section of the member of Figure 1;

Figure 3 is a view of coded data on the member of Figure 1;

Figure 4 shows a modification of Figure 3;

Figure 5 is a perspective view of a reader for the member of Figure 1;

Figure 6 is a perspective view, partially cut-away, of the reader of Figure 5;

Figure 7 is a plan view partially cut-way of the reader;

Figure 8 is a cross-sectional view of a reading head of the reader of Figure 5;

Figure 9 is a schematic diagram of the optical path of the reader;

Figure 10 is a perspective view of a disc changing mechanism of the reader;

Figure 11 is a block circuit diagram of a control system of the reader;

Figure 12 is a diagram of velocity versus distance to illustrate a control action of the circuit of Figure 11;

Figure 13 is a flow chart illustrating a control action of the circuit of Figure 11;

Figure 14 is an exploded view of an air bearing arrangement of the reader;

Figure 15 is a block diagram of a data studio for the production of master discs for the reader; and

Figure 16 is a schematic view of a reader for rectangular storage members.

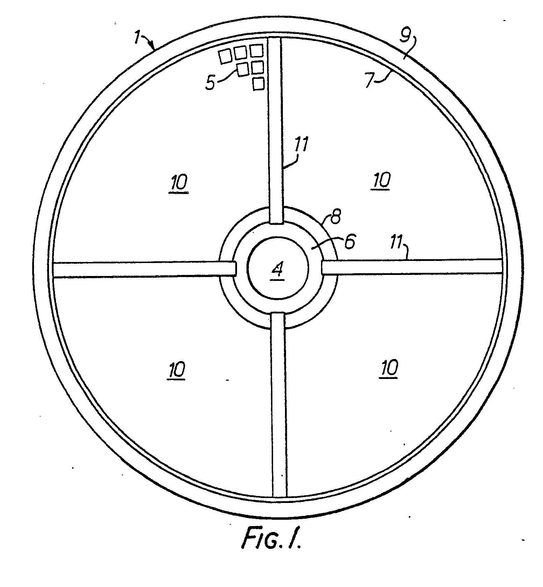

Figures 1 to 14 show an embodiment of an optical data storage system comprising optical data storage members in disc-form and an optical data reader.

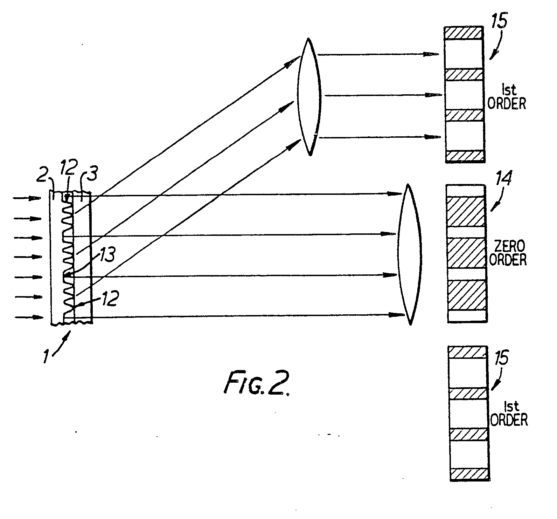

Figures 1 and 2 illustrate an example of an optical data storage member 1 in schematic plan and section.

The member 1 is a transparent laminated thermoplastics (PVC) disc of about 30 cm diameter consisting of two discs 2 and 3 (Figure 2) of 50 to 100 microns thickness and which are sealed together, e.g. statically- or heat-sealed at their periphery and centre. Disc 2 is embossed on one surface with data as a surface relief pattern, preferably of regular form (e.g. as parallel sets of ridges or as a regular grid or grids if projections) with the ridges or projections amplitude modulated in height. This pattern is protected by the second, transparent, disc 3.

A hole 4 is provided in the central area of the disc for locating the disc 1 in the data reader. The illustrated disc 1 carries optically displayable information data and also control data. The information data is arranged on the disc 1 in zones 10 in substantially rectangular areas 5, each such area being referred to herein as a 'page' of data. These pages 5 are arranged in concentric circles. In principle, any arrangement of the pages is possible such as spiral, square grid or even random, but an arrangement with concentric circles enables a simpler control system to be provided to locate individual pages. The pages 5 may be any of a variety of sizes depending on the resolution and reproduction size requirements and the pages on a single disc need not all be of identical sizes. A typical page size may be between 3.4 mm × 2.4 mm and 2.8 mm × 2.2 mm for A4 optical projection read-out. This gives a capacity of between 7,000 and 12,000 pages in zones 10. It will be noted that the page size indicated in Figure 1 is greatly exaggerated. Typically 0.9 mm² could be a minimum bearing in mind the illumination intensity and optical system required.

For video reproduction on a conventional video display unit, the page size might be a minimum of 0.8 mm × 1.14 mm typically 1.6 mm × 2.2 mm, giving a much greater capacity of pages.

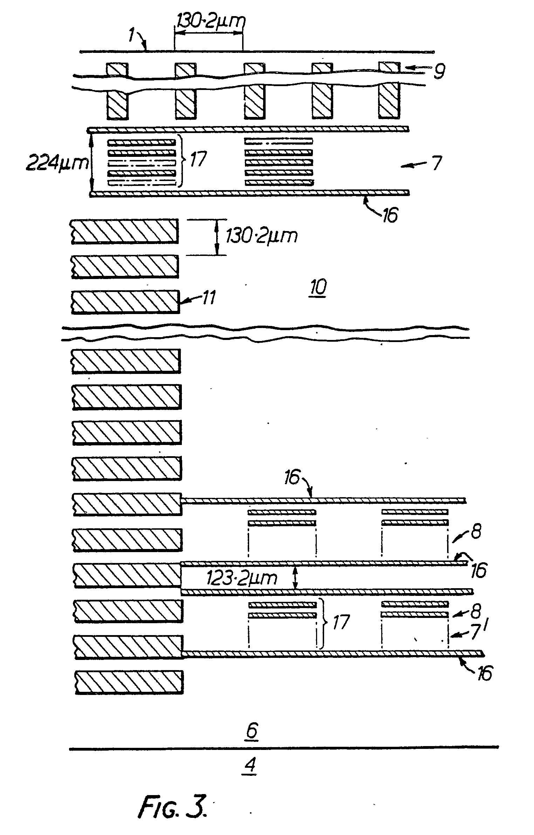

A central annulus 6 of about 5 cm radius is left substantially free of data and radial and circumferential tracks 7, 9 and 11 are also provided, these carrying analog and/or digital coded page locating and control data. The control data is intended to be used by positional servos to provide page access. The form of this control data will be described later with reference to Figure 3. A track or tracks 8 of digital data is also shown and will be described later.

The surface relief pattern on the disc is, in this example, in the form of a diffraction grating, also called a carrier frequency grating, modulated by the data to be stored. This is diagrammatically shown in Figure 2, which illustrates the simplest form of this modulation, wherein the modulation is either present, as at 12, or not, as at 13. To reconstruct an image of data stored on the disc in this way, a light is shone through the modulated grating over one complete page and simple optics are used to view one of the diffraction orders, preferably the zero order, from that page. As illustrated in Figure 2, light passing through the areas 12 where grating is present is diffracted out of the zero diffraction order 14 to the first order 15 and therefore reconstructs as black in the zero diffraction order 14, whereas those areas 13, where the grating is absent, let light through into the zero order and there reconstruct as white. In the first diffraction orders 15 the areas 12 reconstruct as white and the areas 13 as black. Hence a black and white image of the data stored in one page of the disc is reconstructed in both orders. Either image can be directly viewed by the user through optics, or by amplification by a photoelectric amplifier before display, or by the use of electronic means converting the analog page into corresponding video signals for a video display unit. The height of the variations in the surface relief are chosen to give the best black to white intensity ratio, i.e. to give the least light in the zero order, and may typically be about 0.85 μm in height.

It should be noted that many forms of carrier grating or other pattern are possible. For example, a superposition of a number of gratings may be used to increase the black density. Two crossed sine gratings can give black optical densities of up to 1.8. Of course the reconstructed image contrast can be enhanced electronically.

The capacity of the disc depends on the maximum spatial frequency that can be embossed on the disc. For a thermoplastics disc, this maximum is around 2,000 cycles/mm. The highest information spatial frequency using this method of recording information is about half the spatial frequency of the carrier grating, i.e. about 1,000 line pairs/mm. The dimension of the smallest resolvable picture point in the zero order is equal to the pitch of the carrier grating.

Although a very fine grating gives a high information storage capacity and good resolution, it also requires stricter tolerances. The optimum spatial frequency of the carrier grating is probably around 400 to 700 line pairs/mm giving a pitch of 1.4 μm. A density as low as 125 lines/mm can give acceptable results in some circumstances, but a density at least as high as 250 lines/mm is preferable and above 350 lines/mm is most preferable. The upper limit depends on the wavelength used and technological limits but 2000 lines/mm seems feasible.

The optimum profile and amplitude of the carrier grating is that which produces no light in the zero diffraction order over the largest part of the visible spectrum. This optimum will now be described.

A blazed grating profile and a sinusoidal profile achieve satisfactory results in this respect. A sinusoidal profile is used in the described embodiment as it is relatively easy to produce, e.g. by recording two beam interference fringes in photoresist, or by electron beam profiling of thermoplastic, as will be described later. A grating having an optical amplitude A of 425 nm is preferred and results in the highest black density in the zero order; the physical peak-to-peak amplitude $=A/_{n-1}$ (n is the refractive index of the disc material), and for thermoplastic with n = 1.5, the preferred physical amplitude is 425 nm/(1:5 − 1) = 0.85 μm, as mentioned above.

A square grating with a mark to space ratio of 1:1 gives a good zero order attenuation over a small range of colours and hence a colour filter may be used to reduce zero order transmission.

The described disc storage member can also be used to store grey scale or colour images. A grey scale can be recorded by variation in the mark to space ratio of the relief pattern. Areas of the pattern having unity mark to space ratio reconstruct as black in a projected image; as the mark to space ratio decreases, the whiteness increases. Areas having no pattern reconstruct as white.

A more straightforward alternative way of producing grey scale images is to use a standard printing industry half-tone raster technique. The image then consists of a pattern of dots in 'black' or dots in 'white'. The grey level in a reconstrucred image is determined by the local concentration of these dots.

Colour images can be recorded using two pages of information, preferably side by side, on the disc. One page records the luminance signal in black and white, the other records colour information. Such a disc can only be read in colour using two detectors, one for each of the two side-by-side pages, and electronic processing to combine the information in the two pages to form a single colour page.

Alternatively, colour information can be recorded using a height encoded pattern. A square wave pattern profile is particularly good for this application, as the zero order light from a square wave grating is colour sensitive. Carrier patterns of three different amplitudes are used, one corresponding to each of the primary colours. Regions of a page which comprise relief pattern having a high diffraction efficiency for a particular colour will produce a region in the image of that page of the complementary colour, e.g. a grating having a higher efficiency for green light appears magenta.

Frequency, or angle, encoding colour information is also possible. In this case the frequency, or angle, of the carrier pattern, is chosen so as to reconstruct a particular colour in the zero diffraction order (or in whichever order the data is being read).

Figure 3 is a diagram of the control data tracks in developed form. Each bit of data is hatched in this figure and corresponds to unmodulated grating, the plain areas which are adjacent being 100% modulated, i.e. 'white'. The reverse is also possible when the hatched areas are 'white'.

At the periphery is the incremental, angular position, track 9 consisting of a regular series of bits at a spacing of 130.2 μm and with a width of 2 to 3 mm. A fixed miré fringe transducer will continually monitor this track to provide an angular measure of the travel of disc 1.

Below track 9 in the figure is the absolute angular position track 7 (an alternative position 7' is shown just above area 6). This track comprises a pair of guard rails 16 of 5.6 μm width between which are sets 17 of bits, each set being a radially extending 20 bit character comprising 16 data bits and 4 control bits, e.g. providing a check digit. Each set comprises hatched areas representing digital '1' and unhatched areas (shown dotted) representing digital '0'. There is one set aligned with each successive pair of bits in track 9. This track therefore defines the absolute angular disc position every 130.2 μm. Circular rails or tracks 16 serve the purpose of defining the limits of the data and also enable disc eccentricity to be measured. During one complete revolution of the disc the rails can be scanned and at each set of bits 17 an eccentricity value can be measured and stored to provide eccentricity compensation during servo position control.

One or mora data tracks 8 are also provided and have the same structure as track 7.

One of four radial tracks 11 is also shown in Figure 3, consisting of a series of bits, as does track 9, with a spacing of 130.2 μm and a width of 2 to 3 mm.

Each radial track corresponds in extent to a radial series of pages and divides the information carrying area into four zones 10.

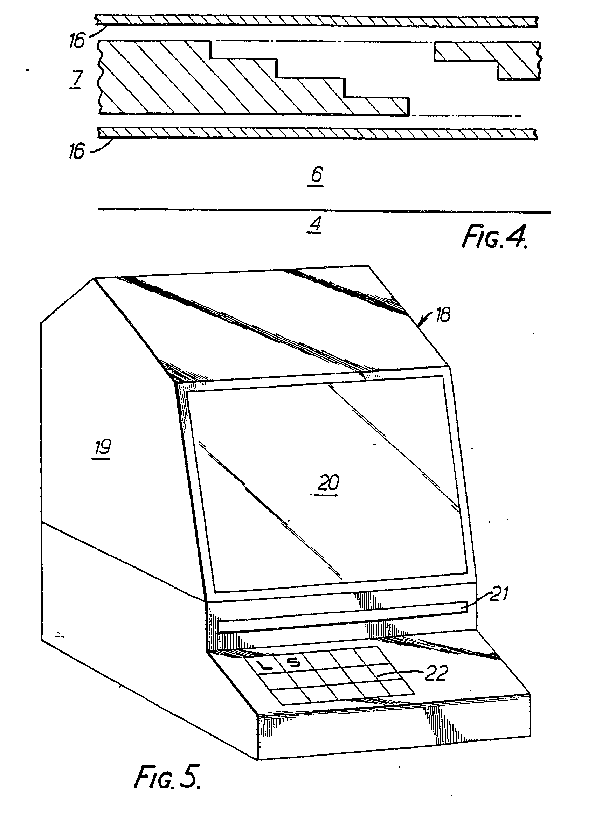

Figure 4 shows an alternative form of track 7 using a form of Gray code. As an example, this track is shown adjacent area 6.

It will be apparent that all these bits of Figures 3 and 4 could be provided as magnetic or photographically produced markers, but preferably are optically readable gratings as already described to unify the technology employed and to enable disc reproduction to be carried out by a cheap thermoplastics embossing process.

The plastics discs may be produced by known replication techniques similar to those used in the gramophone industry, from metal master discs.

The metal master discs may be made in any of the following manners:

1. Photomechanically.
2. Using a laser beam.
3. Using an electron beam.

The photomechanical method comprises first producing a diffraction grating on a metal disc, then covering it with photoresist and exposing the photoresist to micro images of the pages and control data to be recorded. After development, the resulting surface relief pattern is electroplated and then used as a stamping master.

The diffraction grating may be arranged on the disc in a variety of manners. It may be as a series of parallel straight lines running across the disc, or as a series of concentric circles, or as a spiral centred at the centre of the disc.

Preferably a single grating covers the whole disc, but a patchwork of gratings, even of different orientations, may be used. In this latter case, care must be taken to ensure that no page of data is embossed on a grating join. It will be appreciated that a disc having a patchwork of gratings can only be easily read using the zero diffraction order.

The grating may be produced by any known techniques: by ruling, e.g. using laser or electron beam scanning, or by recording two beam interference patterns in photoresist.

A metal master disc covered with a diffraction grating can be used to generate a large number of copies, each of which can then be coated with resist and exposed to micro images. A precision computer controller can then automate and synchronise the indexing of all the copies.

A laser beam can be used directly to write a high resolution modulated diffraction grating and can produce a 30 cm diameter master disc in less than 30 minutes. In this process, a master disc, coated with photoresist, is rotated continuously while a modulated laser beam, focused to a spot on the disc, tracks radially. This process results in a modulated diffraction grating drawn on a spiral.

Of course the data to be recorded in this manner is buffered and multiplexed into a complex format to supply the data in a suitable order for recording i.e. recording cannot be effected in real time.

Alternatively, this method could be used simply to record a spiral diffraction pattern on the disc whilst other methods are used subsequently to provide the data as modulations of the grating.

Another method avoiding buffering is to generate a laser raster pattern with a spot diameter of approximately half the carrier grating pitch to compose each page individually on the disc. This would enable easy updating of disc masters with new pages. However, the laser beam deflector needed for this method needs very high performance characteristics, for example, for a 700 lines/mm carrier grating a resolution of 1400 spots/mm is needed in conjunction with an access time of 30 μsecs for a standard video scan rate. Polygonal, multi-faceted continuously rotating mirrors and holographic grating scanners have been found to give the best performances.

An electron beam can also be used to write master discs either by writing a modulated grating directly onto electron beam resist, or by the technique known as thermoplastic recording. Thermoplastic recording comprises depositing charge from an electron beam onto the surface of a thermoplastics film spun onto a flat substrate. The thermoplastics film is separated from the substrate by a metal film and is heated above its plastics flow temperature, causing the surface to deform under the action of electrostatic forces. The metal film preferably has graded resistance to provide a uniform heating pulse. Smooth curves always result from this method. It is possible to tailor the spot size, and hence the charge distribution, the mean beam current, the amplitude of modulation and the heating pulse in order to produce reasonable groove profiles and particularly sinusoidal grooves.

Square wave groove profiles can be produced by electron beam recording in electron resist, with a typical groove depth of 0.9 μm in a polymer for an electron energy of 8 kV. The width of the groove can be adjusted by adjusting the current and spot size of the beam, and consistent shapes are obtainable.

Preferably, writing is accomplished by rotating the disc slowly on a precision rotary table, whilst an electron beam writes radially in circumferential tracks. This method allows sequential writing of complete pages allowing signals in normal video format to be used without complex buffering and multiplexing.

Alternatively, the disc can be rotated continuously and translated radially, using a fixed electron beam to generate a spiral grating.

Electron beam master recordings tend to have higher resolution than those made photomechanically or with lasers.

Once a thermoplastic or resist master disc has been prepared and developed, a metal stamping master is formed and then replicated. A metal stamping master can be formed from a thermoplastic master disc by deposition of a metal (either in vacuum or by chemical reduction). The thickness of the deposit can be increased by electroplating.

Replication is carried out on thermoplastics discs using a hot stamping press. The temperature of the master is held above the glass flow temperature of the thermoplastics disc and pressure is applied to transfer the master pattern to the thermoplastics disc. The master and thermoplastics disc are then separated and the disc is allowed to cool.

Reproduction of a disc by this method takes approximately 10 seconds. The speed can be increased by a thermal pulse derived from a large current pulse applied to the metal master; alternatively Radio Frequency heating may be used to increase the production rate to approximately 10 per second. Up to 10,000 embossings from a single master is possible under optimum conditions.

Figure 5 is a perspective view of a reader 18 for the described discs. An upper housing 19 supports a translucent screen 20 and contains mirrors (not shown) to project an image onto the screen. The lower part of the reader has an aperture 21 for the insertion of discs and an input means 22 in the form of a keyboard. On operating the keyboard, a drawer will project from aperture 21 and a disc will be inserted in the drawer. Further operation of the keyboard causes the drawer to be pulled back into the reader.

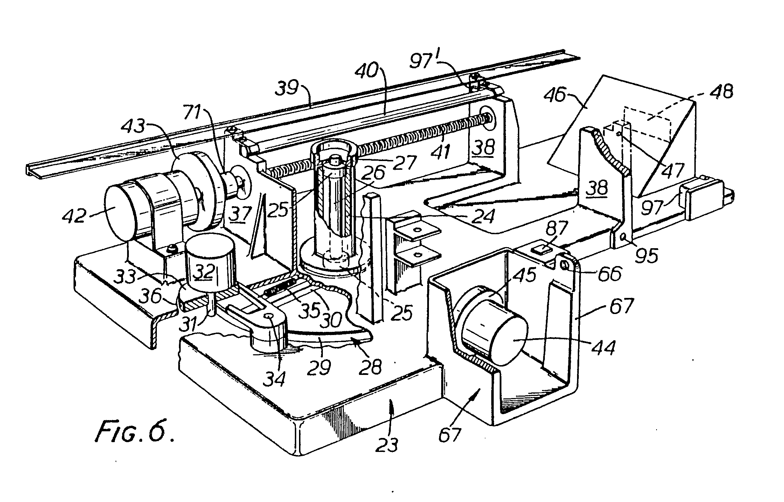

Within the reader is a chassis 23 which will now be described with reference to the partially cut-away view in Figure 6.

Mounted on this chassis 23 is a vertically extending bearing tube 24 containing bearings 25 rotatably supporting a disc drive shaft 26 carrying at its upper end a cup-shaped member 27 which will engage the underside of a disc. The lower end of shaft 26 carries, below the floor of the chassis 23, a drive wheel 28 comprising a rubber-covered rim 29 supported by a plurality of spokes, one of which is shown at 30. The rim 29 engages the shaft 31 of a DC analog motor 32 having a flywheel 33. This provides a 1:40 coupling between the motor 32 and the drive shaft 26. The motor 32 is pivotally supported about an axis 34 and is biased by a spring 35 to urge the shaft 31 against the rim 29. The flywheel is mounted with clearance in an aperture 36 in the floor of the chassis.

A transverse wall 37 and two upstanding posts 38 provide four attachment points for various elements now to be described.

Firstly, the four attachment points support two rails, one of which is shown at 39, these rails providing a guide for the drawer mentioned above. The attachment points also support two guide rods, one of which is shown at 40 and which provide guides for a reading head, to be described later. Below the illustrated rod 40 is a lead screw 41 which is rotatably supported by one of the posts 38 and by the wall 37. This lead screw 41 will engage a threaded member attached to the reading head as will be described hereinafter. The lead screw 41 is driven by a DC analog motor 42 having a flywheel 43.

Figure 6 also illustrates a further DC analog motor 44 with flywheel 45 the purpose of which is to act via a cam mechanism to be described to actuate the drawer and a disc clamping mechanism.

The chassis also supports a mirror 46 which will reflect images towards the screen 20 shown in Figure 5. An aperture 47 is provided in the centre of mirror 46 to enable a portion of the light impinging on this mirror to pass through it to a photocell array 48, the purpose of which is to read the digital data in the tracks described above. This array 48 contains 256 individual photocells.

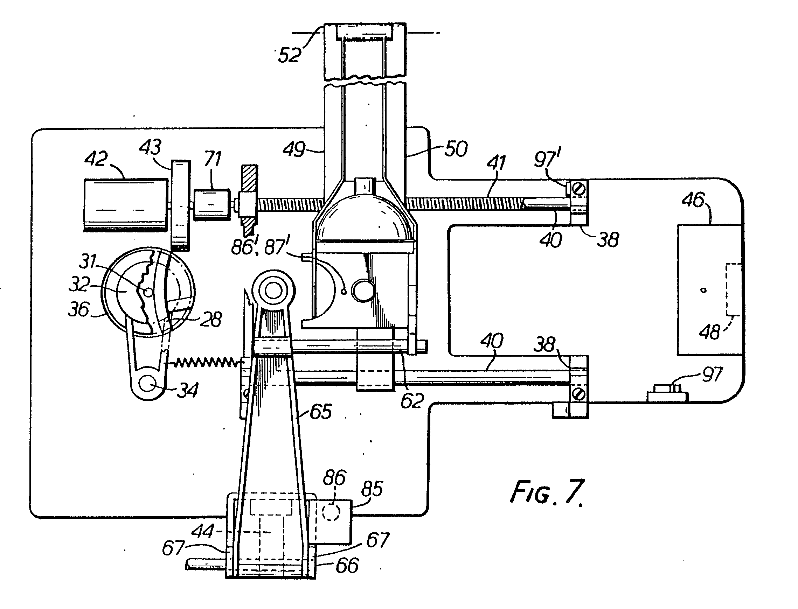

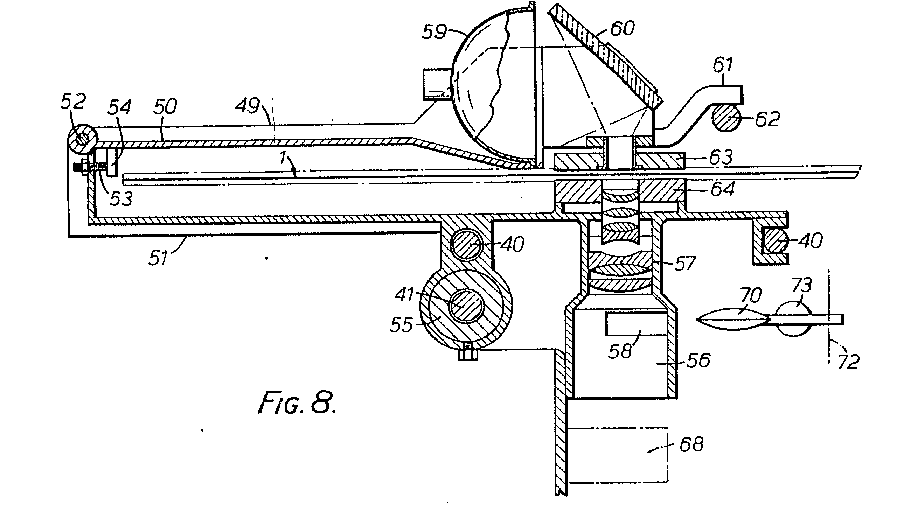

Details of the reader will now be further described with reference to Figures 7 and 8, Figure 7 being a partially cut-away plan view of the chassis shown in Figure 6 and with certain parts removed, and Figure 8 being a cross-sectional view of the reading head.

Figure 7 shows the guide rods 40 and the lead screw 41, all engaging the reading head generally designated 49.

The reading head 49 as shown in Figures 7 and 8 comprises two major parts, an upper arm 50 and a lower arm 51. Arm 50 is pivotally supported at 52 to the lower arm 51 and its horizontal orientation can be adjusted by way of a screw 53 which engages a stop 54 projecting from arm 50. The lower arm 51 is engaged by the lead screw 41 in screwthreaded engagement with a back-lash free nut arrangement 55. The rods 40 are also shown, in Figure 8, to be in sliding engagement with the lower arm. The lower arm 51 also carries a tube 56 which contains a set of projection lenses 57 and which also incorporates a slot 58 into which a further lens may be inserted to alter the optical characteristics of the path, in particular to adapt the magnification of the optical path for scanning the digital data by means of the photocell array 48.

The upper arm 50 supports a light source 59 comprising an ellipsoidal reflector. Illumination from the light source 59 is reflected downwardly by means of a mirror 60, carried by arm 50, through disc 1 to the lenses 57.

The arm 50 also has a projection 61 which engages a rod 62 which is part of the disc drawer mechanism to be described hereinafter. The rod 62 is actuated to lift the arm 50 away from arm 51 to enable insertion and removal of the disc 1, with its drawer, to be effected.

An air bearing arrangement comprising air bearing members 63 and 64 is also provided to enable the relatively flexible disc 1 to be stabilised in the area being imaged in order correctly to focus the image relative to the optical system.

Figure 7 also shows a pivoted arm 65, which carries the rod 62 and which forms part of the disc clamping mechanism. This arm 65 is pivotally supported at 66 to uprights 67 of the chassis, these uprights 67 being illustrated in Figure 6.

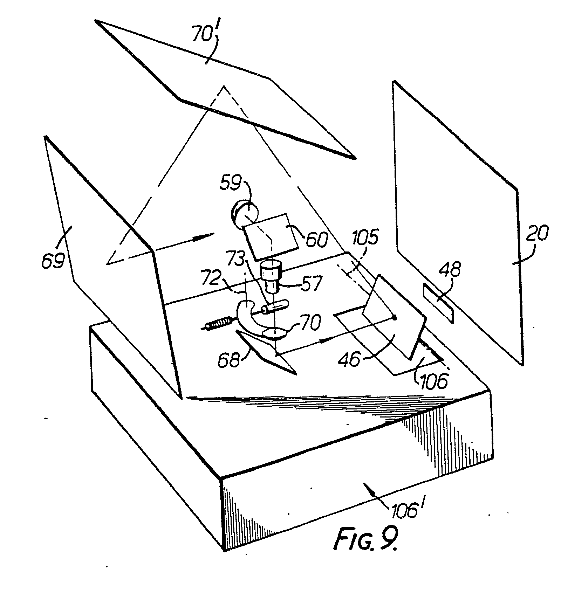

Figure 9 is a diagram of the optical path in the reader. Light from source 59 is reflected downwardly by mirror 60 through the disc and lenses 57 to a mirror 68 (Figure 8). Mirror 68 reflects the light horizontally to mirror 46, thence to screen 20 *via* mirrors 69 and 70' in housing 19. Some light impinging on mirror 46 will pass through to the photocell array 48. The further lens mentioned above is shown at 70, is pivotally mounted at 72 and is actuated by a solenoid 73.

Figure 9 also illustrates diagrammatically an alternative embodiment in which mirror 46 is pivotally mounted about axis 105 to direct light downwardly through aperture 106 to a hard copy printer 106'. This may be based upon a known principle, such as a plain paper copier, or a dry-toned zinc oxide paper copier or a dry silver photographic paper copier.

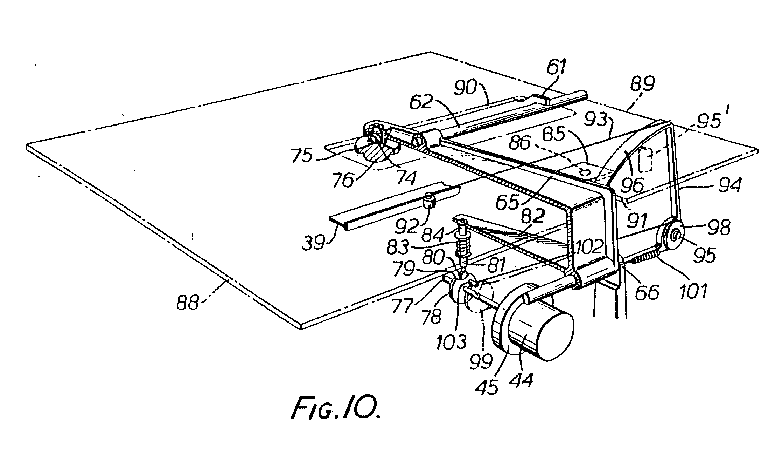

Figure 10 illustrates the drawer mechanism for discs, together with the disc clamping mechanism.

This figure illustrates the member 65 which is pivotally mounted at 66 to walls 67 of the chassis. It also illustrates the rod 62 which engages the underside of projection 61 of the upper member of the reading head. At the free end of member 65 is mounted a rubber bushing 74 carrying at its lower end a disc engaging member 75 having a convex projection 76 which will engage within the hole 4 of the disc and clamp it onto the cup-shaped member 27 shown in Figure 6.

Figure 10 also shows the motor 44 which has a shaft 77 on which is mounted a cam 78. Cam 78 has a cut-out 79 to be engaged by a bearing member 80 at the lower end of a vertically, slidably mounted, shaft 81. The shaft 81 is coupled to a limb 82 of member 65 by a spring 83 and a projection 84 of the limb 82. It will be appreciated that when the motor 44 is energised its rotation will be imparted to the cam 78, which will cause the bearing member 80 to ride out of the cut-out 79 and thus lift rod 80 and hence limb 82 and the whole of member 65. The member 65 will be maintained in this lifted position for a major portion of one revolution of the cam 78. When the member 65 lifts, so does a platform 85 attached to the member 65, this member 85 carrying on its lower surface one portion 86 of the moiré fringe transducer utilised to read the angular incremental track 9 of the disc. The other member 87 of the transducer is illustrated in Figure 6 and is carried by a projection of one of the walls 67.

In the raised position of arm 65, the upper member 50 of the reading head is also raised by way of rod 62, so that the disc is free to be removed and inserted by use of a drawer indicated in dashed lines at 88 in Figure 10. This drawer has an open end 89 at one enb for the insertion of a disc and also incorporates various apertures, two of which are shown at 90 and 91. Aperture 90 enables the optical system of the reading head to apply illumination through a disc when supported by the drawer, and aperture 91 similarly provides for operation of the moiré fringe transducer 86, 87. The drawer at its lower surface carries a plurality of bearing members, one of which is shown at 92 in Figure 10, these bearing members running on the rails 39, shown in Figures 6 and 10. The bearing member 92 shown in Figure 10 is attached by a cord 93 to a member 94 pivotally mounted at 95 to the chassis 23. The member 94 has an arcuate surface 96 centred on axis 95 so that the cord 93 is retained in a substantially horizontal position in all angular positions of member 94. Member 94 has a projection 95' which will engage a limit switch 97 (Figure 6) to sense the end position of member 94.

Also attached to the member 94 is a pulley 98 which engages a pulley 99 by means of a cord 100 incorporating a spring 101. The pulley 99 is shown in dotted lines in Figure 10 and is mounted on shaft 77 so that it is free to rotate relative thereto. The rear surface of the pulley 99 incorporates a segmentally-shaped recess 102 within which is positioned the free end of a projection 103 of the cam 78. It will be apparent that when the bearing member 80 is riding on the circular outer periphery of the cam 78, the projection 103 will engage the pulley and cause it to rotate with the motor 44, hence causing rotation of member 94 and consequent sliding of the drawer into and out of the reader.

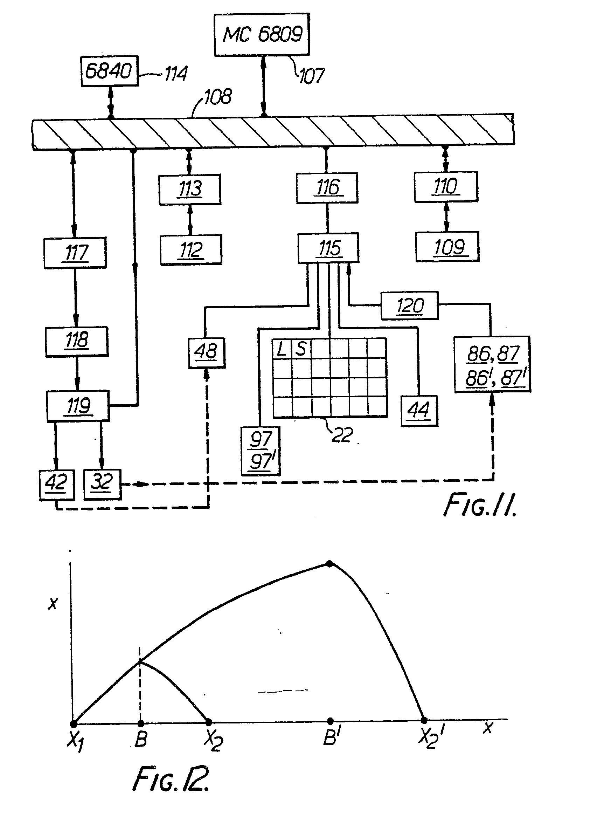

Figure 11 is a schematic circuit diagram of the electornic control system of the reader.

This is based upon an MC6809 microprocessor chip and detailed information on usage can be found, for example, from 'An introduction to Microcomputers', Volume II, Some Real Products by Adam Osborne and Associates. Motorola data sheets also provide detailed instructions. Accordingly Figure 11 shows only a schematic circuit diagram.

The microprocessor circuit itself is designated 107 107 in Figure 11 and is coupled to a system data bus 108. Also coupled to the data bus, *via* addressing and interface logic 110, is a read/write memory 109. A read only memory 112 is also coupled to the data bus by way of addressing and interface logic 113. A 6840 timer 114 is also coupled to the data bus for the purpose of timing during servo control. Input/output ports 115 are also provided, being coupled to the data bus by interface logic 116. Coupled to the ports 115 are moiré fringe transducers 86, 87 and 86', 87', the keyboard 22 and the photocell array 48. The moiré fringe transducers are coupled to the ports by an up-down 14 counter 120. The motor 44 is also coupled to the input/output ports as are limit switches including limit switches 97 and 97'.

The data bus also communicates with an eight-bit, plus sign bit, digital-to-analog converter 117 controlling a power amplifer 118 which drives motors 32 and 42 *via* a multiplexer/changeover switch 119.

Motor 32 is shown coupled to the moiré fringe transducers *via* a dotted line in Figure 11, this representing the optical coupling *via* the control data tracks 9 and 11. Similarly the motor 42 is shown coupled by a dotted line to the photocell array (with decoding logic) 48, this representing the data coupling *via* the optical system shown in Figure 9.

The operation of the system will now be described.

The memory 112 contains program data which defines the fundamental operation of the reader, including defining functions for keys of the keyboard 22. In Figure 11 two of these deys are designated L and S.

The operator will initially, having applied power to the system, actuate key L in order to activate motor 44 in the direction causing the drawer to emerge through the aperture 21. The operator will then insert a disc through the open end of that drawer and re-activate key L to operate the motor in the reverse sense to drive the drawer back into the reader and cause the member 65 to be lowered to clamp the disc in position.

On hitting the key S, a starting sequence will be initiated as follows.

Firstly, the reading head will be displaced to its radially outermost position, detected by a limit switch 97' (Figure 6), whilst the disc is being rotated at constant speed, in order that the system may scan the track 7. In this condition, data from the photocell array, with decoder, 48 will be received by the microprocessor. The width of this array is more than sufficient to encompass the radial width of band 7, so that, within certain limits of eccentricity, the whole of the band can be imaged onto the photocell array. According to the amount of eccentricity at any particular angle, a different set of photocells will have the image of bit sets 17 imaged upon them. The microprocessor will be able to detect which cells, if any, have the guard rails imaged upon them and from this will determine three factors. Firstly, it will determine whether or not both rails are within the range of the array, and, if not, will adjust the radial position of the reading head accordingly. Secondly, it will determine the actual value of eccentricity at that given angular position and will store that value in memory 109. Thirdly, it will be able to ascertain which photocells are in a position corresponding to the positions of the twenty bits of a set 17. These particular photocells will be read by the microprocessor to establish the individual bit values. In particular, if it is ascertained that, say, a known group of eight photocells of the array have a position corresponding to a given bit, then, say, the output from the middle four photocells of that set will be averaged to obtain the bit value. Further angular position measurement can now be effected by way of the transducer 86, 87, because this transducer operates when the reading head is withdrawn away from the track 7.

The next step in the process will be for the disc to be halted at a given angular position corresponding to that in which the reading head is aligned with a given one of the radial tracks 11. The incremental bits in that track are read by a moiré fringe transducer 86', 87' the position of which on the head is shown in Figure 7. This position is slightly nearer the centre of the disc than the optical axis defined by the lenses 57, accounting for the extension of tracks 11 into central annulus 6. The reading head will be moved radially inwardly under servo control from the track 11 to reach track 8 (or a given one of tracks 8) and will read the sets of data bits contained therein a serial manner. A first group of characters or words in track 8 will be read into the microprocessor system so that the system may ascertain the type of disc, in particular, whether or not any index track is provided, whether or not any programming track is provided and whether or not there is any "title" or "menu" page to be accessed initially. It is pointed out here that one or more tracks 8 may be provided with program data which defines the manner in which the reader should respond to data indexing information, and such programming information will be read into memory 109 for subsequent use during reading of the disc.

If the data read from the track or tracks 8 defines an initial page to be displayed, the microprocessor will calculate the nearest radial track, drive the disc until the reading head overlies that track and then hold the disc stationary until the reading head has been moved radially to the required radial co-ordinate for that page. For the present it is noted that when this stage has been reached, the reading head will have been set to image the page to be displayed, so the microprocessor system will have ceased reading data from the photocell array 48, and will have withdrawn the lens 70 to enable that page to be displayed by way of the optical system shown diagrammatically in Figure 9. The disc will then be rotated under servo control the angular distance necessary to reach a position corresponding to the known angular co-ordinate of that page. Such radial and angular servo control positioning is under control of the transducer 86', 87' and the transducer 86, 87 in conjunction with the motors 42 and 32 and this control will be described in more detail hereinafter. The operator may select further pages by actuating keys on the keyboard.

In one scheme, the indivdual pages have page numbers running from, say, 1 to 9000 and the operator may input that page number to access the corresponding page. The microprocessor will decode that page number into a corresponding radial co-ordinate value and angular co-ordinate value for page searching in the manner briefly described above.

An alternative method of access is *via* indexing, and this process will be described hereinafter.

The way in which the servo positioning system operates upon motors 32 and 42 will now be described in more detail.

Firstly it will be apparent that the system must incorporate two servos one for controlling the rotational position of the disc by motor 32 and the other for controlling the radial position of the reading head by motor 42. The only difference between the two servos is the value of the coefficients used by an algorithm within the microprocessor system for calculating motor control voltage. These coefficients will be stored in the memory 112. Motor control data is supplied to the digital-to-analog converter 117 which controls the power amplifier 118 so that it should deliver the desired control voltage with the correct polarity or sign. Radial or angular control is selected by the multiplexer or switch 119.

Because each servo is fundamentally the same, that applicable to controlling angular motion only will be described in detail.

From the information available to the microprocessor, it knows at any one moment the current angular position of the disc and the desired angular position and accordingly knows the distance of angular travel required. If that distance is extremely small, only fine-control is applied, but when that distance is greater than a given value, then the control of position is effected firstly by coarse-control followed by fine-control.

In the coarse-control operation, the timer 114 plays a part in generating an interrupt every 8.9 ms, this time interval being the main sampling period for the servo system. The coarse-control algorithm of the system is in two parts, firstly an acceleration phase in which full motor voltage is applied by the power emplifier, and a deceleration phase in which a deceleration voltage is applied by the power amplifier of such a value as to stop the motor with the disc having reached a "window" around the final target.

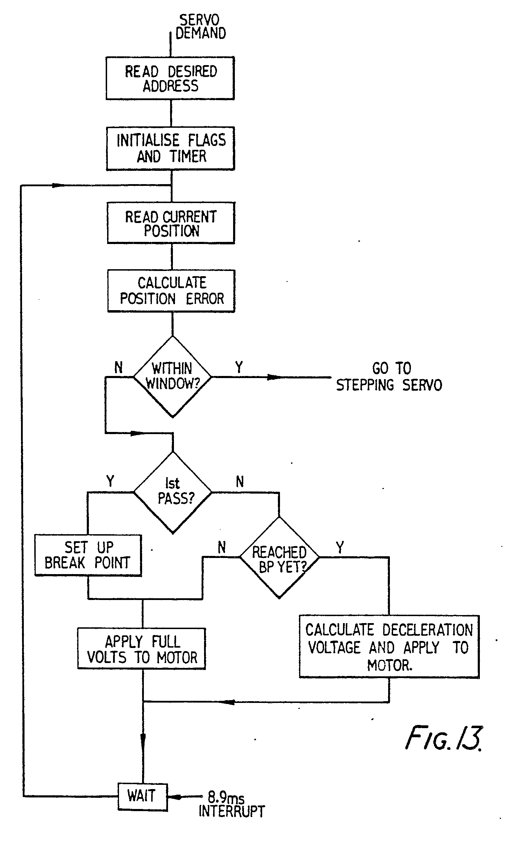

Figure 12 shows two typical velocity profiles plotted against distance. The origin is a point $X_1$ designating the starting position and $X_2$ and $X_2'$ represent two alternative finishing positions. In the example shown in Figure 12 the travel from $X_1$ to $X_2$ is intended to represent the limit of travel for the system for which the motor speed is never large enough for motor back EMF to be significant. In this case, the changeover from acceleration to deceleration occurs at a brake point B which is substantially half way between $X_1$ and $X_2$. Whenever the distance travelled, e.g. to $X_2'$, is greater than $X_2 - X_1$, a brake point B' is calculated which is beyond the half way point, and is in particular substantially at a point such that B' $X_2' = BX_2$.

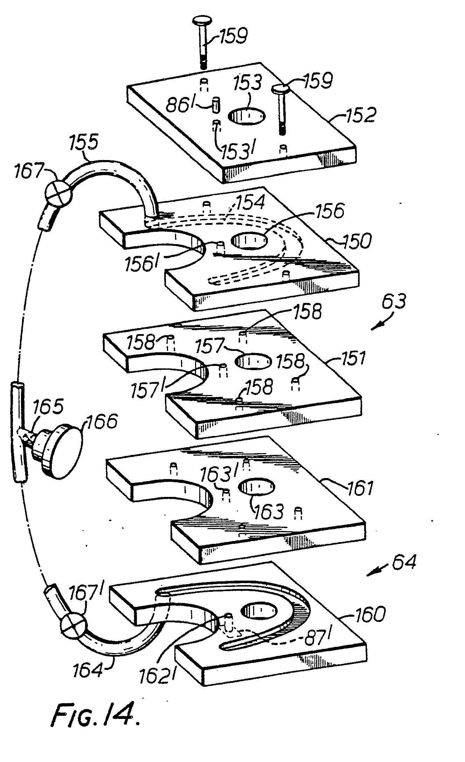

Accordingly, the software in memory 112 provides the following series of steps. Initially, the current position is determined and the position error calculated. It is then calculated whether or not the error is within a given "window" and if it is then the software defines fine-control. Ogherwise the software calculates the position B or B' corresponding to the error previously calculated and then applies full voltage to the motor. 8.9 milliseconds later, the current position and the position error are re-calculated and it is àgain determined whether or not the window has been reached. If not, the system ascertains whether the point B or B' has been reached and if it has it proceeds to the deceleration phase. Otherwise, full voltage is maintained on the motor. This process is repeated every 8.9 ms. Figure 13 is a flow diagram of the process involved.

Eventually the brake point B or B' will be reached and the deceleration phase will commence in which a deceleration voltage to be applied by the power amplifier is calculated every 8.9 milliseconds. The algorithm provided in the system is as follows:

$$V = \frac{K_1 X^2}{2X_e} - K_2 X - K_3$$

In this algorithm the first term represents the required deceleration to stop on target, the second term represents the correction factor due to back EMF and the third factor is a correction to compensate for friction. $X_e$ is the positional error calculated every sampling period, X is a calculated value of velocity corresponding to the change in distance over the sampling period divided by the sampling period, and V is the motor voltage required for deceleration. The sampling period has been chosen in this example to make the most significant coefficient $K_1$ equal to 32 so that only a shift operation is required in the software for the calculation of the first coefficient. An approximate division routine is used in the software for calculating the first term to save microprocessor time. It should also be noted that every 8.9 milliseconds the servo measures the exact value of $X_e$, so that no accumulative errors result from this approximation.

The fine-control is carried out as follows.

Firstly, the distance to be travelled is calculated from the known existing and desired positions. From this data the form of the voltage is calculated on the basis that it should consist of an acceleration pulse followed by a deceleration pulse. The relative amplitudes of these pulses are adjusted to allow for rolling friction and their combined effect is to cause the disc to move one small step.

Step size is determined by the width of the pulses, this width being calculated by the microprocessor from the known position error.

The ultimate resolution is determined by the friction and stiffness of the moving parts. In particular, if the motor performs one very small step, the disc does not move as the drive wheel 28 merely distorts and then springs back when the drive is stopped. Nevertheless, this gives a minimum step size of less than 0.9 minutes of arc, equivalent to 40 µm at the perimeter of the disc.

A further function implemented by the microprocessor is a focussing adjustment to compensate for focussing differences between reading track 7 and tracks 8 at different radii, when the difference in optical path length to array 48 would provide a badly focussed image at array 48 at some radii. As described hereinafter, the disc is supported out of contact with moving parts by an air bearing with an adjsutable air pressure. Accordingly, during reading by array 48, the microprocessor adjusts the air pressure according to the radial position of head 49.

An alternative method is to provide a different optical path for array 48. In this case solenoid 73 will put into the path a weakly negative lens and a mirror, the mirror directing light to an arrangement mounted on the chassis and comprising lens 70 and array 48 a fixed distance apart. The negative lens will provide compensation for the variations in distance between it and lenses 57 as the head moves radially.

It has been indicated above that a digital track 8 could be provided so as to contain indexing information. Moreover digital programming information can be stored to provide the reader with software particularly adapted to handle the indexing data that is provided on the same disc. In this way a variety of types of indexes can be made compatible with a single embodiment of disc reader by having the reader effectively reprogrammed in part each time a disc is loaded.

One type of indexing scheme which is suitable in the present context is that using so-called post-co-ordinate indices. This type of index is appropriate to data bases where the information to be retrieved cannot necessarily be described by a single unique route *via* a hierarchical tree but rather by a logical combination of descriptive parameters or key words. In this scheme the operator is expected to enter the logical combination of key words describing the information required *via* an alpha-numeric logical operator section of the keyboard. The processor then interprets each key word entry and receives from the digital index provided by the disc a list of pages pertinent to those key words. The processor then performs a prescribed logical operation(s) to produce a hit list of pages which conform to the entered logical combination of key words.

The preferred method of implementing such an index is by the use of a controlled vocabulary giving a defined set of allowed key words. Accordingly, the operator is first presented, on the optical display, with a menu page of file names which broadly describe the categories of allowed key words. Such allowed key words might be "AUTHOR", "CHEMICAL COMPOUND" etc. By selecting one of these names from the menu page, the system accesses *via* the digital data on the disc a corresponding sub-menu list of allowed key words within the selected file name category. Selecting a key word from that list causes the system to retrieve the list of pages pertinent to that key word and deposit them in a fuser file in the processor memory. The operator may in the alternative specify a boolean combination of the displayed key words with the result that the appropriate list of pages would be selected from the index and entered into the user file. Several user files may be created from key words within different file name categories. Finally the operator can enter a logical combination of some or all user files and produce a hit list as before.

In selecting the choice of either file name or key words, the operator need only key in a number associated with that term as displayed on the menu page on the screen. This enables a simple and cheap numeric keyboard to be used and provides simplified operator operation.

Another type of indexing system which is appropriate to the present reader is a pre-co-ordinate hierarchical index where the operator requires some specific information regarding an item contained in the data base, e.g. the part number of a component of an automobile.

In this system, the operator is presented with the main menu page listing the broad topics covered by the data base, e.g. engine, gear box etc. In selecting one topic, he is presented with another menu page providing a more detailed selection within the chosen topic. This process continues until the final menu page shows the information required by the operator.

Data bases which require only a simple optical hierarchical index require no significant digital information at all to be stored on the disc as the menu pages provided could give absolute page numbers which may be accessed by the operator as already described above.

In large systems, several discs may be required to hold all the 'pages' of a data base and the indexing and programming required may be relatively extensive. In that case, one complete disc may be devoted to indexing and program data so that its zones 10 are entirely made up of digital data tracks 8. Such a disc will be supplied initially to the reader to supply memory 109 with the data it requires for operation with the analog data of the remaining discs.

A final aspect of the reader mentioned briefly above is the focussing system required to adjust the vertical position of the imaged area of the disc relative to the lenses 57. In particular, a system is chosen which makes no contact with the disc, to ensure that there is no damage to the disc during rotation and no drag on the disc such as would increase the load on the disc drive motor 32. In fact, to minimise this load, the disc is supported at its central area 6 only, so that the remainder of the disc can flex by an amount which varies with radius, so making any system of focussing difficult which involves adjustment to the optical system.

An air bearing system attached to the reading head is chosen because it not only supports the disc where it is being imaged without contact, but also allows minor adjustments to be made in air pressure for fine focussing.

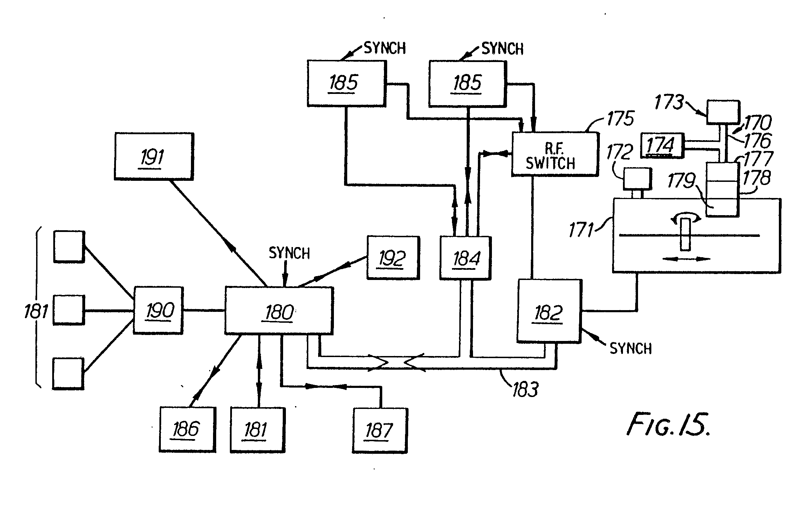

One air bearing scheme is illustrated in Figure 14 as an exploded view.

The upper bearing 63 comprises two plates 150 and 151 attached together and mounted to depend from a plate 152 forming part of the reading head member 50 below mirror 60 and containing aperture 153 for the optical path of the reading head and aperture 153' for passage of light from moiré fringe transducer element 86'.

Plate 150 is an air supply plate containing a groove 154 in its undersurface supplied with compressed air by a flexible tube 155 which runs along and is strapped to member 50 of the reading head. Plate 150 contains apertures 156 and 156' for the optical paths.

Plate 151 is a thrust plate containing apertures 157 and 157' for the optical paths and several through-passages 158 (0.178 mm diameter) which in use open into groove 154 and so provide air jets which set up a layer of pressurised air between the disc and the thrust plate 151.

Threaded bolts 159 pass freely through plate 152 and are threaded into plate 150 to allow the bearing 63 to move vertically relative to plate 152, whilst preventing it from rotating.

The lower air bearing 64 comprises an air supply plate 160 and thrust plate 161 secured together and apertured at 162 and 163 for the optical path and at 162' and 163' for passage of light to transducer element 87'. This bearing is fixedly secured to the lower member 51 of the reading head. Air is supplied to bearing 64 by a flexible tube 164 strapped to the member 51 of the reading head.

Tubes 164 and 155 are coupled by way of an adjustable needle valve 165, by which air may be vented to atmosphere, to an electrically driven compressor unit 166, mounted on the chassis. This compressor unit supplies about 5 lbf/in$^2$ gauge.

The resulting structure provides two thrust pads between which the disc rotates. Air is supplied to the pads at about 0.5 litres/min. causing the disc to hover between the pads with a separation of about 30 microns between the disc and each pad. By adjsuting the flow by means of valve 165, the disc, and the upper bearing, can be adjusted in height for fine focussing. Coarse focussing is achieved by mounting the lenses 57 in a tube screw-threaded into tube 56 of the reading head (Figure 8).

Further needle valves 167 and 167' may be provided for control of relative pressure. Valve 165 is controlled by the microprocessor as described above and all three valves may be manually controllable for fine focussing of optical images.

In an alternative, bearing 63 is fixedly secured to plate 152 and the pressure difference between opposite sides of the disc is controlled for focussing by adjusting one or both of valves 167 and 167'.

As already discussed, thermoplastics discs for the reader described above can be clearly produced in quantity by a stamping or embossing process from a master disc.

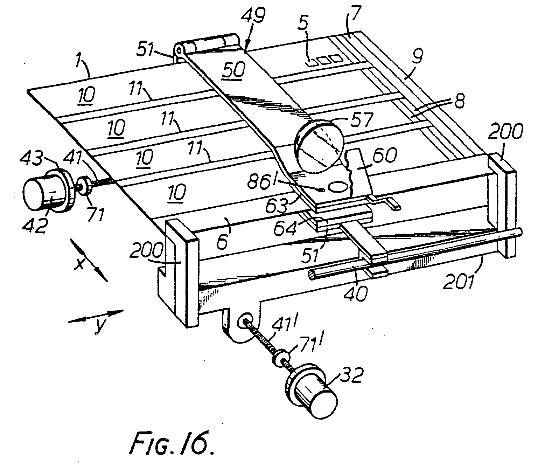

Master discs are prepared in a studio, a preferred form of which is schematically shown in Figure 15. Discs utilised in the studio are discs already provided with a carrier-frequency grating by means, for example, of a Neumann lathe. Resist is then applied to the discs, for example by spinning. These discs are then recorded by means of an electron beam recorder 170 provided with beam-blanking so as not to activate areas of resist not to be modulated, e.g. between 'pages' of data. Beam-blanking is achieved in this example, by beam deflection. The recorder comprises a recording chamber 171 with a volume of 225 litres and evacuated to a pressure from 10$^{-4}$ to 10$^{-3}$ torr during recording by a diffusion pump 172. This working vacuum is also maintained by a diffusion pump 174 connected to the anode section of an electron gun 173 having a lanthanum hexboride cathode.

The gun uses a 1 mm square section LaB$_6$ rod with a tip sharpened to a radius of curvature of 5 microns. Around and close to, but not in contact with, this rod is a tungsten heating coil held at a negative potential relative to the rod. The rod is heated both by radiation and electron bombardment from the tungsten coil.

The sharpened tip is brought close to and concentric with a 0.5 to 1 mm aperture in a tantalum disc Wehnelt grid. This grid could be modulated to control the beam current. This feature is not required since beam modulation is achieved by the use of beam blanking. The grid is therefore operated in an autobias mode to give a controlled and constant beam current. Both tip and grid are maintained at approximately minus twenty kilovolts relative to ground potential.

The anode is at ground potential. It is parallel to and separated by about 2 mm from the grid. The exit beam passes through a 1 mm aperture in the centre of the grid. All electron beam acceleration occurs in the grid-anode region. This region also forms an electrostatic lens, which forms a 'crossover' or image of the emitting region of the cathode tip in the grid-anode space. For aligning the anode with the optical axis, alignment coils are incorporated in the space in the pumping T-section 176 below the gun 173.

The pumping T-section 176 is the point at which the column pumping is provided, since in this region a high vacuum is required. The components (grid, anode) in this area become fairly warm during operation but since they are constructed primarily of stainless steel, the resultant outgassing can be coped with by the pumping system. Both beam blanking and beam alignment facilities are in this area.

Below section 176 are electromagnetic condenser lenses 177. There are two condenser lenses, which are conventional asymmetric equal bore radius electromagnetic lenses. The bore $D = 20$ mm, which is sufficiently large to take a brass bore liner tube. The liner tube passes through both condenser lenses and is vacuum sealed at the top and bottom so that both sets of lens polepieces are in air. The lenses are provided with 200 turn coils which will safely carry up to 5 amps.

Below the lenses 177 is a control section 178 and final lens 179. The control section contains a column isolation valve, and a beam limiting aperture for the final lens. This aperture is fixed in use but means are provided for X and Y shifts to enable the aperture to be accurately centred on the electron optic axis. This is required before precise electron beam scanning aberration compensation can be effective.

Column isolation is by a simple flap valve with an O-ring in its face which seals upwards into a horizontal surface. The seating piece for the seal has a loose pivot support so that it can find its own place when seating.

The remainder of the system of Figure 15 relates to the means for the input of data and its formatting into a form suitable for the electron beam recorder.

The system is centred around a Hewlett Packard HP1000F processor 180 combined with hard disc storage facilities 181, printer 191 and console (HP2647) 192. This system provides the necessary processing to achieve the page formatting, electron beam drive and index creation objectives.

High speed data communications between the central processor and an electron beam interface 182 are provided, in the proposed system, by a standard IEEE 488 data bus 183. This bus passes data to the electron beam recorder in the case where the data is originated by the computer. Also it handles the passage of control information between computer and interface 182. Also connected to the bus is an intelligent control unit (HP 2240) 184 which can communicate with the central processor 180 and which provides control signals for two video players 185 (i.e. telecine) and the associated data path switching 175.

The data path between the video players 185 and the recorder 170 is outside the computer system. This ensures that the speed of data transfer between these devices will not be limited by the computer system.

The computer system can take data input from various sources, including a floppy disc drive 186 and a nine track tape drive 187. A local facsimile input 188 is included, and provides a method of entering small quantities of hard copy data independently of the video players. Several VDU's 189 are coupled to the processor multiplexer 190 for the manual input of data, which may be in the form of text intended to be incorporated onto the optical pages of the disc, or index data.

It is necessary to achieve the transfer of data to the electron beam recorder partitioned into lines and frames and at the correct rate. To this end, the elements of the system associated with data transfer receive their timing references from a set of master synchronising pulses. These pulses are generated centrally and are distributed to the appropriate points in the system, e.g. the processor 180, video players 185 and interface 182.

A minimum data rate of 4 M bits per second is intended for this studio. This rate is compatible with electron beam and electron resist technology.

The data base itself may originate in electronic form or as hard copy. In addition, and particularly in the case of a new data base, a substantial amount of index data is involved. The minimum requirement is a data stream of 4 M bits/s to be delivered to the recorder, and addiitonally this data must be split into lines and frames in a manner analogous to a TV signal. The servo requirements at the recorder for disc rotation and translation are such that, in addition, the frames of data must come at regular intervals to ensure the proper placing of microfilm images on the disc.

As a page is approximately 4 M bits of information and there may be, say, 4,800 pages per disc, the performance required from a hard copy scanner is such as to make preferable the use of an intermediate medium for the storage of images originating as hard copy, in particular microfilm.

The data preparation process is then as follows. The information provider is supplied with a microfilm camera to accumulate, at his own speed, the optical pages of his data base. These pages are stored sequentially along with a unique frame identification code on a reel of microfilm. Once the hard copy has been converted to film it is in a form which is much easier to handle mechanically. The two telecine machines 185 scan the microfilm at the appropriate rate, i.e. they are used to replay at high speed a film prepared by an information provider.

Much database material already exists in electronic form. This is the case as a result of the increased use of computer controlled phototypesetting and computer output on microfilm.

The physical transfer of computer-originating data can be achieved by means of the nine track computer drive 187. However, there is no guarantee that the data on tape will be in a form which will be compatible with the data studio software. The data studio facilities are able to take coded data and convert it to the raster format required by the recorder. However, transcribing the output of any database into suitable form may in some cases require the writing of special software.

Index data prepared by a user could enter the system by floppy disc or tape, for example.

Finally, Figure 16 illustrates schematically a modification in which an x,y (orthogonal) coordinate system is used.

Where elements of Figure 16 correspond to elements in the embodiment described above, the same reference numerals are used.

In this embodiment, the storage member is a planar, rectangular, sheet 1 having x,y axes, position in the y co-ordinate being given absolutely by digital track 9. Adjacent track 9 are a linear incremental y track 7 and digital data tracks 8. Incremental x-tracks 11 divide the sheet 1 into information storage zones 10 containing 'pages' 5 of analog information or digital tracks of indexing and program data. A strip 6 is left free of data to provide a clamping zone. Strip 6 is releasably clamped at two points by elements 200 carried by a carriage 201 slidably movable in the x direction. Carriage 20' is engaged by lead screw 41' driven, via universal joint 71', by motor 32.

Reading head 49 is precisely as shown in Figures 7 and 8, except that no semicircular cut-out is required to accommodate the central support of a disc. Thus, air bearings 63, 64, source 59, mirror 60 and all other items as shown in Figure 8 are provided. Lead screw 41 again is coupled to motor 42 by universal joint 71 and flywheel 43. Electronic and optical system remain as shown in preceding figures.

## Claims

1. An optical data storage member which is a substantially planar member (1) comprising a first, information storage, zone (10) for the storage of information in individual unit areas of the zone which areas can be individually optically imaged by non-laser light, and a second, control, zone or zones (7, 8, 9, 11) distinct from the first zone and which stores machine readable control data for use in accessing the individual unit areas of the first zone, characterised in that, in order to provide random access to any one of a multiplicity of positions of a two-dimensional array of positions within the informatioin storage zone (10), the storage member has a two-co-ordinate addressing system defined by the second zone or zones and comprising (a) means (7) defining an absolute address of the storage member in one of the co-ordinate directions and a reference position in the other, and (b) means (9, 11) providing distance data in both co-ordinate directions for use in measuring travel distances relative to the absolute address and reference position, said providing means (9, 11) comprising a control track (9) extending in one co-ordinate direction of the addressing system and providing an incremental scale for use in measuring incremental travel distances relative to the absolute address independently of the position and content of any data within said first zone.

2. A member according to claim 1, wherein the or one first zone (10) comprises a plurality of individually imagable pages of information, with the pages arranged in a two-dimensional array, said incremental scale (9) defining a unit of measurement so small that the length of one dimension of any one of said pages is not less than a plurality of said units of measurement.

3. A member according to claim 1 or 2, the second zone comprising a further control track (11) extending in the other co-ordinate direction and providing a further incremental scale for use in measuring incremental travel distances in the other co-ordinate direction relative to the reference position.

4. A member according to claim 1, 2 or 3, wherein the or one incremental scale (9) extends along an edge region of the member (1).

5. A member according to any one of the preceding claims, wherein the absolute address defining means comprises a zone (7) containing machine readable data defining a series of absolute address values digitally in said one co-ordinate direction.

6. A member according to any one of the preceding claims, the second zone comprising a data track (7, 8) comprising digital data stored as a sequence of characters (17) along the track, each character comprising a series of bits extending substantially at right angles to the track direction.

7. A member according to claim 6, when appended to claim 5, wherein the absolute address defining zone (7) is a data track as defined in claim 6.

8. A member according to any one of the preceding claims wherein at least one control zone (7, 9) extending in one co-ordinate direction is bordered on at least one side by a track (16) defining a limit to that zone.

9. A member according to any one of the preceding claims, and including at least one machine readable digital data track (8) additional to the absolute address defining means.

10. A member according to claim 9, wherein the digital data track or tracks (8) includes an indexing track comprising indexing data providing addresses of corresponding positions within the storage zone (10).

11. A member according to any one of claims 1 to 9, wherein the first zone (10) comprises pages (5) of information which occupy discrete areas of the storage member (1) and each of which can be imaged as a whole by non-coherent illumination.

12. A member according to claim 11, wherein each page (5) is substantially rectangular.

13. A member according to claim 11 or 12 wherein the pages (5) are in concentric rings.

14. A member according to claim 11 or 12 wherein the pages (5) are arranged along a spiral path.

15. A member according to any one of claims 11 to 14, wherein each of a plurality of said pages (5) comprises an analog representation of information.

16. A member according to any one of claims 11 to 15, wherein the daa in said pages (5) is represented by amplitude modulation of the relief height of a pattern of surface relief variations.

17. A member according to claim 16, wherein the pattern is at least one regular diffraction grating.

18. A member according to claim 17, wherein the or each diffraction grating has a substantially sinusoidal profile.

19. A member according to claim 17, wherein the or each grating has a substantially square profile.

20. A storage member according to any one of claims 11 to 19 and comprising an indexing, digital data, track separate from the storage zone and containing indexing data, relating to information in said pages, and associated numeric addresses for said pages in the two co-ordinate addressing system.

21. A member according to claim 10 or 20, and comprising a digital track (8) including control data in the form of machine readable and interpretable instructions defining a mode of use of said indexing data.

22. A member according to any one of the preceding claims, wherein the second, data, zone or zones has or have data elements stored as amplitude modulation (12, 13) of the relief height of a pattern of surface relief variations (Figure 2) of the storage member which are optically readable in at least one diffraction order.

23. A member according to claim 22, wherein said elements are stored as data bits each comprising a substantially flat area (100% modulated) surrounded by unmodulated relief variations.

24. A member according to claim 22, wherein said elements are stored as data bits each comprising an area of relief variations surrounded by a substantially flat (100% modulated) area.

25. A member according to any one of the preceding claims and which is of thermoplastics material.

26. A member according to any of the preceding claims, wherein the second zone or zones defines a polar co-ordinate system of addressing.

27. A member according to any one of claims 1 to 12 or to any one of claims 15 to 25 when not appended to claim 13 or 14, wherein the second zone or zones defines a cartesian co-ordinate system of addressing.

28. An optical data storage apparatus comprising light-directing means (35, 60) for directing non coherent light at distinct areas of a substantially planar data storage member (1) having at least one first zone (10) for storing optically readable data and at least one second zone (7, 9, 11) distinct from the or each first zone and defining accessing data, drive means (32, 34) for producing relative motion between the light-directing means (59, 60) and the storage member (1), input means (22) for defining a desired area (5) of the first zone or zones (10), reading means (49, 86, 87) for reading said accessing data, and control means (107) for controlling the drive means in dependence upon the accessing data read by the reading means to cause the light-directing means and storage member to be positioned relatively to one another to cause light to be directed over the desired area (5), characterised in that the control means (107) are operable to derive from the input means the co-ordinates of the defined desired area in a two-co-ordinate system of the storage member, the control means further being operable (a) to obtain absolute positional data defining a datum in a first and a second co-ordinate direction of said two-co-ordinate system of the storage member from the accessing data read from the storage member, said accessing data being provided by means defining an absolute address of the storage member in one direction and a reference position in the other and means for providing distance data in both co-ordinate directions, and (b) to control the operation of the drive means (32, 34) to produce said relative motion as increments of motion relative to the datum measured by means including an incremental scale (9) of, and extending in one co-ordinate direction of, the storage member, thereby to reach a position, as defined in said two-co-ordinate system, corresponding to the co-ordinates of said desired area.

29. Apparatus according to claim 28, and comprising means (49, 86, 86') for reading two incremental scales (9, 11) extending in respective co-ordinate directions of the storage member, to produce increments of motion in both co-ordinate directions measured by use of said scales (9, 11).

30. Apparatus according to claim 28 or 29, wherein the reading means (49, 86, 87) and control means (107) are designed to measure from the scale or scales (9, 11) increments of motion of such a small size relative to a dimension of one said areas as to enable the light to be directed over any one of a multiplicity of areas in a two-dimensional array of areas within the storage zone.

31. Apparatus according to claim 28, 29 or 30 and comprising transducer means (86, 87) for reading an incremental scale extending along an edge region of the member.

32. Apparatus according to claim 31, wherein the transducer means (86, 87) comprises a moire fringe transducer for reading optically readable incremental position elements.

33. Apparatus according to claim 31 or 32 when appended to claim 29, and comprising further transducer means (86', 87') for reading the other incremental scale.

34. Apparatus according to claim 33, wherein the further transducer means (86', 87') are carried by the light directing means.

35. Apparatus according to any one of claims 28 to 34, and comprising data reading means (48) for reading absolute positional data from a storage member track extending in one co-ordinate direction and defining a series of absolute address values digital.

36. Apparatus according to claim 35, wherein the light directing means (56, 60) comprises an optical system (57) by which the absolute positional data is imaged onto said data reading means (48).

37. Apparatus according to any one of claims 28 to 36, wherein the control means are arranged to cause the reading means to read data from a data track (8) additional to said absolute and incremental accessing data.

38. Apparatus as claimed in claim 37, wherein the control means are operable in dependence upon indexing data read from said additional data track (8) of the storage member, the indexing data defining addresses in said two-co-ordinate system corresponding to respective portions of the indexing data, the co-ordinates of said desired area being obtained from said indexing data by way of data defined by the input means.

39. Apparatus according to any one of claims 28 to 38, and comprising sensing means (57, 48) for scanning a storage member track (7) extending in a first co-ordinate direction of a storage member during operation of the drive means in a first direction of action intended to be in the first co-ordinate direction the control means being operable to detect and store any error between the first co-ordinate direction and said first direction of action for use in making a corresponding compensation to address values for subsequent location of desired areas (5).

40. Apparatus according to claim 39, wherein the sensing means comprises a detector array (48) having a sequence of detectors arranged such that the storage member track (7) can be imaged upon the array during the scan, with the image of said track moving at an angle to the direction of the sequence of detectors, whereby any error existing is detected in dependence upon changes in the particular detectors upon which the storage member track is imaged during the scan.

41. Apparatus according to any one of claims 28 to 40, for a storage member formatted with accessing data for rotational operation, the drive means being operable to provide angular and radial relative motion.

42. An apparatus according to claim 41, when appended to claim 39, and designed for use with a storage member in which the co-ordinates are polar co-ordinates, the first direction of action being on a circular path substantially coaxial with the co-ordinate system, and the drive means having a second direction of action that is substantially radial relative to the co-ordinate system.

43. An apparatus according to claims 39, 40 or 42, or claim 41 when appended to claim 39, wherein the sensing means (48) is arranged to the sense the storage member track (7) by way of an optical system (57) of the light directing means.

44. An apparatus according to any one of claims 28 to 43, wherein said light directing means comprises optical means (57) for imaging optical data when contained in said storage zone areas (5).

45. Apparatus according to any one of claims 28 to 44, wherein the control means comprises two direct current analog servo motors (32, 42), a first (42) of the motors being arranged to drive the light-directing means (49) and the second (30) being arranged to drive the supporting means (26, 27) for a storage member.

46. Apparatus according to claim 45, when appended to claim 41, wherein a lead-screw (41) extends chordwise relative to the reading position of a storage member and engages the light-directing means (49) to drive it radially of a storage member (1).

47. Apparatus according to claim 45 or 46, wherein the control means system comprises a computer processor (107) for determining, from position data read from the storage member (1) and from desired value data, control voltages for the motors (32, 42).

48. Apparatus according to claim 47, wherein for at least one of the motors (32, 42), the control means provides coarse control when the difference between the actual and desired values is greater than a given value and a fine control when the difference is not greater than that given value, the coarse control being operable to apply a substantially constant drive voltage to the motor for a time dependent upon said difference, for motor acceleration, and then to apply a deceleration voltage of a value intermittently recalculated by the processor in accordance with the instantaneous value of said difference and the velocity of the storage member (1), fine control being operable to step the motor to cover any remaining distance required to reach the desired value.

49. An apparatus according to claim 48, in which the deceleration voltage (V) is calculated substantially according to the relation:

$$V = \frac{K_1 X^2}{2X_e} - K_2 X - K_3$$

where $K_1$, $K_2$ and $K_3$ are constants, $X_e$ is the instantaneous value of said difference and $X$ is the mean velocity in the preceding sampling period.

50. Apparatus according to claim 48 or 49 and comprisng a fine control action at the termination of deceleration if any difference still remains between actual and desired values, the fine control action being the calculation of, and supply to the motor of, an acceleration pulse and a deceleration pulse to step the motor substantially to the desired position, the duration of the pulses being calculated in dependence upon the difference then existing.

51. An apparatus according to any one of claims 29 to 50, and comprising focussing means (63, 64) for adjusting the position of an illuminated area of the storage member relative to the light-directing means, the focussing means comprising an adjustable fluid bearing arrangement for supporting the illuminated area on an adjustably pressurised layer of fluid.

52. An apparatus according to claim 51, wherein the bearing means comprises two thrust pads (151, 161) which are each apertured (158) for the passage of pressurised fluid to the zone between the pads, the illuminated area (5) being in that zone between the pads, and a source (166) of fluid under pressure coupled to feed the pads (151, 161), said pressure being adjustable during the relative motion.

53. An apparatus according to claim 52, wherein the pads are mounted one above the other, the lower pad (161) being fixed against vertical motion and the upper pad (151) being mounted for motion vertically so as to vary the height of said zone between the pads as the pressure is adjusted.

54. Apparatus according to claim 52, wherein the pads are mounted in fixed vertical positions one above the other and the pressures of fluid supplied to the pads are separately adjustable during the relative motion.

55. Apparatus according to any one of claims 51 to 54, and comprising means for adjusting the pressurised layer of fluid in dependence upon the relative position of the storage member (1) and light-directing means (49) to compensate for changes in optical path length with changes in said relative position.

**Revendications**

1. Elément de mémorisation de données optiques qui est un élément (1) essentiellement plan et comprend une première zone (10) de mémorisation d'information en vue de la mémorisation d'information dans des domaines unitaires individuels de la zone, lesquels domaines peuvent individuellement et optiquement recevoir la projection d'une image au moyen de lumière non-laser, et une ou des deuxièmes zones (7, 8, 9, 11) distinctes de la première zone et qui mémorisent des données de commande lisibles par machine destinées à l'utilisation pour l'accès aux domaines unitaires individuels de la première zone, caractérisé en ce qu'en vue de fournir un accès sélectif à n'importe laquelle d'une multiplicité de positions d'une matrice bidimensionnelle de positions au sein de la zone (10) de mémorisation d'information l'élément de mémorisation comporte un système d'adressage à deux coordonnées défini par la ou les secondes zones et comportant (a) un moyen (7) qui définit une adresse absolue le l'élément de mémorisation suivant une des directions de coordonnées et une position de référence dans l'autre, et (b) un moyen (9, 11) qui fournit suivant les deux directions de coordonnées des données de distance destinées à l'utilisation pour mesurer les distances de déplacement relativement à l'adresse absolue et à la position de référence, ce moyen de fourniture (9, 11) comportant une piste de commande (9) qui s'étend suivant une certaine direction de coordonnée du système d'adressage et fournit une échelle incrémentielle destinée à l'utilisation pour mesurer les distances de déplacement incrémentielles relativement à l'adresse absolue indépendamment de la position et du contenu de quelque donnée que ce soit au sein de la première zone.

2. Elément selon la revendication 1, dans lequel la ou les premières zones (10) comprennent une pluralité de pages d'information susceptibles de recevoir individuellement la projection d'une image, ces pages étant rangées dans une matrice bidimensionnelle, cette échelle incrémentielle (9) définissant une unité de mesure si petite que la longueur d'une dimension de n'importe laquelle de ces pages n'est pas moindre qu'une pluralité de ces unités de mesure.

3. Elément selon la revendication 1 ou 2, la deuxième zone comprenant une piste supplémentaire de commande (11) qui s'étend suivant l'autre direction de coordonnées et fournit une échelle incrémentielle supplémentaire destinée à l'utilisation pour mesurer les distances de déplacement incrémentielles suivant l'autre direction de coordonnées relativement à la position de référence.

4. Elément selon la revendication 1, 2 ou 3, dans lequel la ou les échelles incrémentielles (9) s'étendent le long d'une région de bordure de l'élément (1).

5. Elément selon l'une quelconque des revendications précédentes, dans lequel le moyen qui définit l'adresse absolue comporte une zone (7) qui contient des données lisibles par machine et définissant numériquement suivant ladite certaine direction de coordonnées une série de valeurs d'adresses absolues.

6. Elément selon l'une quelconque des revendications précédentes, la deuxième zone comprenant une piste de données (7, 8) comportant des données numériques mémorisées comme suite de caractères (17) le long de la piste, chaque caractère comprenant une série de bits qui s'étend essentiellement à angle droit par rapport à la direction de la piste.

7. Elément selon la revendication 6 lorsque celle-ci dépend de la revendication 5, dans lequel l'adresse absolue qui définit la zone (7) est une piste de données comme définie dans la revendication 6.

8. Elément selon l'une quelconque des revendications précédentes, dans lequel au moins une zone de commande (7, 9) qui s'étend suivant une direction de coordonnées se trouve bordée sur au moins un côté par une piste (16) qui définit une limite de cette zone.

9. Elément selon l'une quelconque des revendications précédentes, comportant au moins une piste (8) de données numériques lisible par machine en sus du moyen qui définit l'adresse absolue.

10. Elément selon la revendication 9, dans lequel la ou les pistes (8) de données numériques comprennent une piste d'indexation comportant des données d'indexation qui fournissent des adresses de positions correspondantes au sein de la zone de mémorisation (10).

11. Elément selon l'une quelconque des revendications 1 à 9, dans lequel la première zone (10) comprend des pages (5) d'information qui occupent des domaines discrets de l'élément de mémorisation (1) dont chacun est susceptible de recevoir dans son ensemble la projection d'une image au moyen de lumière non cohérente.

12. Elément selon la revendication 11, dans lequel chaque page (5) est essentiellement rectangulaire.

13. Elément selon la revendication 11 ou 12, dans lequel les pages (5) sont disposées en cercles concentriques.

14. Elément selon la revendication 11 ou 12, dans lequel les pages (5) sont disposées selon un cheminement en spirale.

15. Elément selon l'une quelconque des revendications 11 à 14, dans lequel chacune d'une pluralité de ces pages (5) comporte une représentation analogique d'information.

16. Elément selon l'une quelconque des revendications 11 à 15, dans lequel l'information contenue dans ces pages (5) est représentée par modulation d'amplitude de la hauteur de relief d'un motif de variations de relief de surface.

17. Elément selon la revendication 16, dans lequel le motif consiste en au moins un réseau de diffraction régulier.

18. Elément selon la revendication 17, dans lequel le ou les réseaux de diffraction présentent un profil essentiellement sinusoïdal.

19. Elément selon la revendication 17, dans lequel le ou les réseaux de diffraction présentent un profil essentiellement carré.

20. Elément de mémorisation selon l'une quelconque des revendications 11 à 19, comportant une piste de données numériques d'indexation séparée de la zone de mémorisation et contenant des données d'indexation qui se rapportent à l'information contenue dans ces pages, et des adresses numériques associées à ces pages dans le système d'adressage à deux coordonnées.

21. Elément selon la revendication 10 ou 20, comportant une piste numérique (8) comprenant des données de commande sous forme d'instructions lisibles et interprétables par machine et qui définissent un mode d'utilisation de ces données d'indexation.

22. Elément selon l'une quelconque des revendications précédentes, dans lequel la ou les deuxièmes zones de données présentent des éléments de données mémorisés en modulation d'amplitude (12, 13) de la hauteur de relief d'un motif de variations de relief de surface (figure 2) de l'élément de mémorisation et qui sont lisibles optiquement dans au moins un ordre de diffraction.

23. Elément selon la revendication 22, dans lequel ces éléments de données sont mémorisés sous forme de bits de données comprenant chacun une surface essentiellement plane (modulée à 100%) entourée de variations de relief non modulées.

24. Elément selon la revendication 22, dans lequel ces éléments de données sont mémorisés sous forme de bits de données comprenant chacun une surface de variations de relief entourée d'une surface essentiellement plane (modulée à 100%).

25. Elément selon l'une quelconque des revendications précédentes, constitué de matériau thermoplastique.

26. Elément selon l'une quelconque des revendications précédentes, dans lequel la ou les deuxièmes zones définissent un système d'adressage en coordonnées polaires.

27. Elément selon l'une quelconque des revendications 1 à 12 ou selon l'une quelconque des revendications 15 à 25 lorsque celle-ci ne dépend pas de la revendication 13 ou 14, dans lequel la ou les deuxièmes zones définissent un système d'adressage en coordonnées cartésiennes.

28. Dispositif de mémorisation de données optiques comportant un moyen (59, 60) de direction de la lumière pour diriger de la lumière non cohérente sur des domaines distincts d'un élément (1) de mémorisation de données essentiellement plan et qui comprend au moins une première zone (10) pour mémoriser des données lisibles optiquement et au moins une deuxième zone (7, 8, 9, 11) distincte de la ou des premières zones et qui définit des données d'accès, un moyen d'entraînement (32, 34) pour produire un mouvement relatif entre le moyen de direction de la lumière (59, 60) et l'élément de mémorisation (1), un moyen d'entrée (22) pour définir un domaine de consigne (5) de la ou des premières zones (10), un moyen de lecture (49 86, 87) pour lire ces données d'accès, et un moyen de commande (107) pour commander le moyen d'entraînement en dépendance des données d'accès lues par le moyen de lecture afin d'obtenir que le moyen de direction de la lumière et l'élément de mémorisation soient positionnés l'un par rapport à l'autre afin d'obtenir que de la lumière soit dirigée sur le domaine de consigne (5), caractérisé en ce que le moyen de commande (107) est actionnable pour tirer du moyen d'entrée dans un système de deux coordonnées de l'élément de mémorisation les coordonnées du domaine de consigne défini, le moyen de commande étant en outre actionnable (a) pour obtenir des données de position absolue qui définissent à partir des données d'accès lues sur l'élément de mémorisation une donnée suivant une première et une deuxième direction de ce système de deux coordonnées de l'élément de mémorisation, ces données d'accès étant fournies par un moyen qui définit une adresse absolue de l'élément de mémorisation dans une direction et une position de référence dans l'autre et par un moyen pour fournir des données de distance suivant les deux directions de coordonnées, et (b) pour commander le fonctionnement du moyen d'entraînement (32, 34) afin de produire ce mouvement relatif sous forme d'incréments de mouvement relatifs à la donnée mesurée par un moyen comprenant une échelle incrémentielle (9) de l'élément de mémorisation et qui s'étend suivant une certaine direction de coordonnées de celui-ci, ceci afin d'atteindre une position telle que définie dans ce système de deux coordonnées et qui correspond aux deux coordonnées de ce domaine de consigne.

29. Dispositif selon la revendication 28, comportant un moyen (49, 86, 86') pour lire deux échelles incrémentielles (9, 11) qui s'étendent suivant des directions de coordonnées respectives de l'élément de mémorisation afin de produire suivant les deux directions de coordonnées des incréments de mouvement mesurés au moyen de ces échelles (9, 11).

30. Dispositif selon la revendication 28 ou 29, dans lequel le moyen de lecture (49, 86, 86') et le moyen de commande (107) sont conçus pour mesurer à partir de la ou des échelles (9, 11) des incréments de mouvement de dimension si petite relativement à une dimension de l'un de ces domaines que par suite il soit possible de diriger la lumière sur n'importe lequel d'une multiplicité de domaines dans une matrice de domaines à deux dimensions au sein de la zone de mémorisation.

31. Dispositif selon la revendication 28, 29 ou 30, comportant un moyen transducteur (86, 87) pour lire une échelle incrémentielle qui s'étend le long d'une région de bordure de l'élément.

32. Dispositif selon la revendication 31, dans lequel le moyen transducteur (86, 87) comporte un transducteur à franges de moiré pour lire des éléments de position incrémentielle optiquement lisibles.

33. Dispositif selon la revendicaton 31 ou 32 lorsque celle-ci dépend de la revendication 29, comportant un autre moyen transducteur (86', 87') pour lire l'autre échelle incrémentielle.

34. Dispositif selon la revendication 33, dans lequel l'autre moyen transducteur (86', 87') est porté par le moyen de direction de la lumière.

35. Dispositif selon l'une quelconque des revendications 28 à 34, comportant un moyen de lecture de données (48) pour lire des données de position absolue sur une piste d'un élément de mémorisation, laquelle s'étend suivant une direction de coordonnées et définit une série de valeurs numériques d'adresses absolues.

36. Dispositif selon la revendication 35, dans lequel le moyen de direction de la lumière (56, 60) comporte un système optique (57) par lequel les données de position absolue sont projetées en tant qu'image sur ce moyen de lecture de données (48).

37. Dispositif selon l'une quelconque des revendications 28 à 36, dans lequel le moyen de commande est disposé de façon que le moyen de lecture lise sur une piste de données (8) des données additionnelles en sus de ces données d'accès absolues et incrémentielles.

38. Dispositif selon la revendication 37, dans lequel le moyen de commande est actionnable en dépendance de données d'indexation lues sur cette piste (8) de données additionnelles de l'élément de mémorisation, les données d'indexation définissant dans ce système de deux coordonnées des adresses qui correspondent à des portions respectives des données d'indexation, les coordonnées de ce domaine de consigne étant obtenues à partie de ces données d'indexation au moyen de données définies par le moyen d'entrée.

39. Dispositif selon l'une quelconque des revendications 28 à 38, comportant un moyen senseur (57, 48) pour balayer la piste (7) de l'élément de mémorisation qui s'étend dans une première direction de coordonnées d'un élément de mémorisation pendant le fonctionnement du moyen d'entraînement et dans une première direction d'actionnement censée être située suivant la première direction de coordonnées, le moyen de commande étant actionnable pour détecter et mémoriser toute erreur apparaissant entre la première direction de coordonnées et cette première direction d'actionnement en vue d'une utilisation pour apporter une compensation correspondante aux valeurs d'adresses en vue de la localisation ultérieure de domaines de consigne (5).

40. Dispositif selon la revendication 37, dans lequel le moyen senseur comporte un alignement de détection (48) qui comporte une suite de détecteurs disposés de telle sorte que la piste (7) de l'élément de mémorisation puisse être projeté en tant qu'image sur l'alignement pendant le balayage, l'image de cette piste se déplaçant en faisant un angle avec la directon de la suite de détecteurs, moyennant quoi toute erreur existante est détectée en dépendance de changements affectant les détecteurs particuliers sur lesquels la piste de l'élément de mémorisation est projetée en tant qu'image pendant le balayage.

41. Dispositif selon l'une quelconque des revendications 28 à 40, en relation avec un élément de mémorisation mis en forme avec des données d'accès en vue d'un fonctionnement en rotation, le moyen d'entraînement étant actionnable pour fournir un mouvement relatif angulaire et radial.

42. Dispositif selon la revendication 41 lorsque celle-ci dépend de la revendication 39, conçu pour l'utilisation en relation avec un élément de mémorisation dans lequel les coordonnées sont des coordonnées polaires, la première direction d'actionnement étant située suivant un cheminement circulaire essentiellement coaxial au système de coordonnées, et le moyen d'entraînement présentant une deuxième direction d'actionnement qui est située de façon essentiellement radiale par rapport au systéme de coordonnées.

43. Dispositif selon la revendication 39, 40 ou 42, ou selon la revendication 41 lorsque celle-ci dépend de la revendication 39, dans lequel le moyen senseur (48) est disposé de façon à palper la piste (7) de l'élément de mémorisation au moyen d'un système optique (57) du moyen de direction de la lumière.

44. Dispositif selon l'une quelconque des revendications 28 à 43, dans lequel ce moyen de direction de la lumière comporte un moyen optique (57) pour projeter en tant qu'image des données optiques lorsque celles-ci sont contenues dans ces domaines (5) de zone de mémorisation.

45. Dispositif selon l'une quelconque des revendications 28 à 44, dans lequel le moyen de commande comporte deux servomoteurs analogiques à courant continu (32, 42), un premier (42) de ces moteurs étant disposé de façon à entraîner le moyen de direction de la lumière (49) et le deuxième (30) étant disposé de façon à entraîner le moyen de support (26, 27) d'un élément de mémorisation.

46. Dispositif selon la revendication 45 lorsque celle-ci dépend de la revendication 41, dans lequel une vis mère (41) s'étend suivant une sécante par rapport à la position de lecture d'un élément de mémorisation et coopère avec le moyen de direction de la lumière (49) pour entraîner celui-ci radialement par rapport à un élément de mémorisation (1).

47. Dispositif selon la revendication 45 ou 46, dans lequel le système de moyen de commande comporte un processeur d'ordinateur (107) pour déterminer à partir de données de position lues sur l'élément de mémorisation (1) et de données de valeur de consigne les tensions de commande pour les moteurs (32, 42).

48. Dispositif selon la revendication 47, dans lequel pour l'un au moins des moteurs (32, 42) le moyen de commande fournit une commande grossière lorsque la différence entre les valeurs effective et de consigne est plus grande qu'une valeur donnée et une commande fine lorsque la différence n'est pas plus grande que cette valeur donnée, la commande grossière étant actionnable pour appliquer au moteur une tension d'entraînement essentiellement constante pendant une durée qui dépend de cette différence afin d'accélérer le moteur et pour ensuite appliquer une tension de décélération de valeur périodiquement recalculée par le processeur en conformité avec la valeur actuelle de cette différence et la vitesse de l'élément de mémorisation (1), la commande fine étant actionnable pour amener le moteur à couvrir en une seule fois toute distance qui reste à parcourir pour atteindre la valeur de consigne.

49. Dispositif selon la revendication 48, dans lequel la tension de décélération (V) est calculée essentiellement suivant la relation

$$V = \frac{K_1 X^2}{2X_e} - K_2 X - K_3$$

dans laquelle $K_1$, $K_2$ et $K_3$ sont des constantes, $X_e$ est la valeur actuelle de cette différence et X est la vitesse moyenne durant la période d'échantillonnage précédente.

50. Dispositif selon la revendication 48 ou 49, comportant une action de commande fine à la fin de la décélération si une quelconque différence subsiste encore entre les valeurs effective et de consigne, l'action de commande fine consistant à calculer et à fournir au moteur une impulsion d'accélération et une impulsion de décélération pour amener le moteur en une seule fois à la position de consigne, la durée des impulsions étant calculée en dépendance de la différence alors existante.

51. Dispositif selon l'une quelconque des revendications 29 à 50, comportant un moyen de focalisation (63, 64) pour ajuster la position d'une domaine illuminé de l'élément de mémorisation par rapport au moyen de direction de la lumière, le moyen de focalisation comprenant un dispositif de palier réglable à fluide pour supporter le domaine illuminé sur une couche de fluide pressurisé de façon ajustable.

52. Dispositif selon la revendication 51, dans lequel le moyen de palier comporte deux plaquettes de poussée (151, 161) qui sont chacune munies d'une ouverture (158) pour le passage de fluide pressurisé vers la zone située entre les plaquettes, le domaine illuminé (5) étant situé dans cette zone située entre les plaquettes, et une souce (166) de fluide pressurisé reliée de façon à alimenter les plaquettes (151, 161), cette pression étant réglable pendant le mouvement relatif.

53. Dispositif selon la revendication 52, dans lequel les plaquettes sont montées l'une au-dessus de l'autre, la plaquette inférieure (161) étant fixée de façon à empêcher le mouvement vertical et la plaquette supérieure (151) étant montée de façon à permettre le mouvement vertical afin de faire varier la hauteur de cette zone située entre les plaquettes lorsque l'on règle la pression.

54. Dispositif selon la revendication 52, dans lequel les plaquettes sont montées l'une au-dessus de l'autre dans des positions verticales fixes et les pressions de fluide fournies aux plaquettes sont réglables séparément pendant le mouvement relatif.

55. Dispositif selon l'une quelconque des revendications 51 à 54, comportant un moyen pour régler la couche pressurisée de fluide en dépendance de la position relative de l'élément de mémorisation (1) et du moyen de direction de la lumière (49) pour compenser des changements de longueur de chemin optique par des changements de cette position relative.

**Patentansprüche**

1. Speicherelement für optische Daten, das ein im wesentlichen ebenes Element (1) ist, umfassend einen ersten, zur Informationsspeicherung bestimmten Bereich (10) zur Speicherung von Information in einzelnen Einheitsflächen des Bereiches, welche Flächen einzeln mittels Nicht-Laser-Licht eine optische Abbildung erhalten können, und einen (bzw. mehrere) zweiten (bzw. zweite), zur Steuerung bestimmten (bzw. bestimmte), vom ersten Bereich verschiedenen (bzw. verschiedene) Bereich (bzw. Bereiche) (7, 8, 9, 11), welcher (bzw. welche) maschinenlesbare Steuerdaten zur Verwendung beim Zugriff auf die einzelnen Einheitsflächen des ersten Bereiches speichert (bzw. speichern), dadurch gekennzeichnet, dass zur Gewährleistung eines wahlfreien Zugriffs zu irgendeiner von einer Mehrzahl von Stellen einer Matrix von Stellen innerhalb des Informationsspeicherungsbereiches (10) das Speicherelement ein Zweikoordinaten-Adressierungssystem aufweist, das von dem (bzw. den) zweiten Bereich (bzw. Bereichen) definiert ist und umfasst: (a) ein Mittel (7), das in einer der Koordinatenrichtungen eine absolute Adresse des Speicherelements und in der anderen eine Referenzstelle definiert, und (b) ein Mittel (9, 11) das in beiden Koordinatenrichtungen Abstandsdaten zur Verwendung beim Messen von Bewegungsdistanzen in bezug auf die absolute Adresse und die Referenzstelle liefert, wobei dieses datenliefernde Mittel (9, 11) eine Steuerspur (9) umfasst, die sich in der einen Koordinatenrichtung des Adressierungssystems erstreckt und eine inkrementale Skala zur Verwendung beim Messen von Inkremental-Bewegungsdistanzen in bezug auf die absolute Adresse unabhängig von der Stellung und vom Inhalt von irgendwelchen Daten innerhalb des ersten Bereiches liefert.

2. Element nach Anspruch 1, bei welchem der (bzw. ein) erste (bzw. erster) Bereich (10) eine Mehrzahl von Informationsseiten umfasst, die einzeln eine Abbildung erhalten können, wobei die Seiten in einer zweidimensionalen Matrix angeordnet sind, und wobei die inkrementale Skala (9) eine so kleine Messeinheit definiert, dass die Länge einer der Dimensionen irgendeiner dieser Seiten nicht kleiner ist als ein Mehrfaches von diesen Messeinheiten.

3. Element nach Anspruch 1 oder 2, wobei der zweite Bereich eine weitere Stueurspur (11) umfasst, die sich in die andere Koordinatenrichtung erstreckt und eine weitere inkrementale Skala zur Verwendung beim Messen von Inkremental-Bewegungsdistanzen in der anderen Koordinatenrichtung in bezug auf die Referenzstelle liefert.

4. Element nach Anspruch 1, 2 oder 3, bei welchem die (bzw. eine) inkrementale Skala (9) sich entlang einer Randgegend des Elementes (1) erstreckt.

5. Element nach einem der vorangehenden Ansprüche, bei welchem das die absolute Adresse definierende Mittel einen Bereich (7) umfasst, das maschinenlesbare Daten enthält, welche eine Reihe von absoluten Adressenwerten in der einen genannten Koordinatenrichtung numerisch definieren.

6. Element nach einem der vorangehenden Ansprüche, wobei der zweite Bereich eine Datenspur (7, 8) umfasst, welche numerische Daten enthält, die entlang der Spur als Folge von Datenzeichen (17) gespeichert sind, wobei jedes Datenzeichen eine sich im wesentlichen senkrecht zur Richtung der Spur erstreckende Reihe von Bits umfasst.

7. Element nach Anspruch 6, wenn dieser vom Anspruch 5 abhängig ist, bei welchem der die absolute Adresse definierende Bereich (7) eine Datenspur gemäss der im Anspruch 6 angegebenen Definition ist.

8. Element nach einem der vorangehenden Ansprüche, bei welchem mindestens ein sich in eine Koordinatenrichtung erstreckender Steuerbereich (7, 9) auf mindestens einer Seite von einer Spur (16) umrandet ist, die eine Begrenzung dieses Bereiches definiert.

9. Element nach einem der vorangehenden Ansprüche, das zusätzlich zu dem die absolute Adresse definierenden Mittel mindestens eine maschinenlesbare Spur von numerischen Daten (8) umfasst.

10. Element nach Anspruch 9, bei welchem die Spur (bzw. Spuren) von numerischen Daten (8) eine Indexierspur umfasst (bzw. umfassen), die Adressen von entsprechenden Stellen innerhalb des Speicherbereiches (10) liefert (bzw. liefern).

11. Element nach einem der Ansprüche 1 bis 9, bei welchem der erste Bereich (10) Informationsseiten (5) umfasst, welche diskrete Bereiche des Speicherelements (1) belegen, und von denen jede gesamthaft mittels nichtkohärenter Beleuchtung eine Abbildung erhalten kann.

12. Element nach Anspruch 11, bei welchem jede Seite (5) im wesentlichen rechteckig ist.

13. Element nach Anspruch 11 oder 12, bei welchem die Seiten (5) in konzentrischen Kreisen angeordnet sind.

14. Element nach Anspruch 11 oder 12, bei welchem die Seiten (5) entlang einem spiralförmigen Pfad angeordnet sind.

15. Element nach einem der Ansprüche 11 bis 14, bei welchem jede von einer Mehrzahl dieser Seiten (5) eine analoge Darstellung von Information umfasst.

16. Element nach einem der Ansprüche 11 bis 15, bei welchem die Daten in diesen Seiten (5) durch Amplitudenmodulation der Reliefhöhe eines Musters von Oberflächenreliefschwankungen dargestellt sind.

17. Element nach Anspruch 16, bei welchem das Muster aus mindestens einem regelmässigen Diffraktionsgitter besteht.

18. Element nach Anspruch 17, bei welchem das (bzw. jedes) Diffraktionsgitter ein im wesentlichen sinusförmiges Profil aufweist.

19. Element nach Anspruch 17, bei welchem das (bzw. jedes) Gitter ein im wesentlichen quadratisches Profil aufweist.

20. Speicherelement nach einem der Ansprüche 11 bis 19, umfassend eine für numerische Daten bestimmte Indexierspur, die vom Speicherbereich getrennt ist und sich auf in diesen Seiten enthaltene Information beziehende Indexierungsdaten sowie assoziierte numerische Adressen für diese Seiten in dem Zweikoordinaten-Adressierungssystem enthält.

21. Element nach Anspruch 10 oder 20, umfassend eine Datenspur (8), die Steuerdaten in Form von maschinenlesbaren und interpretierbaren Instruktionen enthält, welche eine Verwendungsweise dieser Indexierungsdaten definieren.

22. Element nach einem der vorangehenden Ansprüche, bei welchem der (bzw. die) zweite (bzw. zweiten) für Daten bestimmte Bereich (bzw. Bereiche) Datenelemente aufweist (bzw. aufweisen), die als Amplitudenmodulation (12, 13) der Reliefhöhe eines Musters von Oberflächenreliefschwankungen (Fig. 2) des Speicherelements gespeichert und in mindestens einer Diffraktionsordnung optisch lesbar sind.

23. Element nach Anspruch 22, bei welchem die Datenelemente als Datenbits gespeichert sind, von denen jedes einen im wesentlichen ebenen Bereich (100% moduliert) umfasst, der von unmodulierten Reliefschwankungen umgeben ist.

24. Element nach Anspruch 22, bei welchem die Datenelemente als Datenbits gespeichert sind, von denen jedes einen Bereich von Reliefschwankungen umfasst, der von einem im wesentlichen ebenen Bereich (100% moduliert) umgeben ist.

25. Element nach einem der vorangehenden Ansprüche, das aus thermoplastischem Material besteht.

26. Element nach einem der vorangehenden Ansprüche, bei welchem der (bzw. die) zweite (bzw. zweiten) Bereich (bzw. Bereiche) ein Polarkoordinaten-Adressierungssystem definiert (bzw. definieren).

27. Element nach einem der Ansprüche 1 bis 12 oder nach einem der Ansprüche 15 bis 25, wenn dieser nicht vom Anspruch 13 oder 14 abhängig ist, bei welchem der (bzw. die) zweite (bzw. zweiten) Bereich (bzw. Bereiche) ein Kartesischkoordinaten-Adressierungssystem definiert (bzw. definieren).

28. Vorrichtung zur optischen Datenspeicherung, die ein lichtrichtendes Mittel (59, 60) zum Richten von nicht kohärentem Licht auf voneinander verschiedene Flächen eines im wesentlichen ebenen Datenspeicherelements (1) umfasst, der versehen ist mit mindestens einem ersten Bereich (10) zur Speicherung von optisch lesbaren Daten und mindestens einem zweiten, von dem (bzw. jedem) ersten Bereich verschiedenen, Zugriffsdaten definierenden Bereich (7, 9, 11), mit einem Antriebsmittel (32, 34) zur Erzeugung einer relativen Bewegung zwischen dem lichtrichtenden Mittel (59, 60) und dem Datenspeicherelement (1), mit einem Eingabemittel (22) zum Definieren einer Sollfläche (5) der (bzw. des) ersten Bereiche (bzw. Bereiches) (10), mit einem Ablesemittel (49, 86, 87) zum Ablesen dieser Zugriffsdaten, und mit einem Steuermittel (107) zur Steuerung des Antriebsmittels in Abhängigkeit von den vom Ablesemittel gelesenen Zugriffsdaten, um zu bewirken, dass das lichtrichtende Mittel und das Speicherelement relativ zueinander positioniert werden, um zu bewirken, dass Licht auf die Sollfläche (5) gerichtet wird, dadurch gekennzeichnet, dass das Steuermittel (107) betätigbar ist, um vom Eingabemittel in einem Zweikoordinatensystem das Speicherelements die Koordinaten der definierten Sollfläche abzuleiten, wobei das Steuermittel ferner betätigbar ist, um (a) absolute Positionsdaten zu erhalten, die aus den am Datenspeicherelement abgelesenen Zugriffsdaten eine Angabe in einer ersten und einer zweiten Koordinatenrichtung des Zweikoordinatensystems des Speicherelements definieren, wobei die Zugriffsdaten durch ein Mittel geliefert werden, das in einer der Richtungen eine absolute adresse des Speicherelements und in der anderen eine Referenzstelle definiert, sowie durch ein Mittel geliefert werden, das in beiden Koordinatenrichtungen Abstandsdaten liefert, und (b) um den Betrieb des Antriebsmittels (32, 34) so zu steuern, dass eine relative Bewegung in Form von Bewegungsinkrementen in bezug auf die Angabe erzeugt wird, die mit einem Mittel gemessen wird, welches eine inkrementale Spur (9) des Speicherelements umfasst, die sich in eine Koordinatenrichtung des Speicherelements erstreckt, womit eine im Zweikoordinatensystem definierte, den Koordinaten der Sollfläche entsprechende Stellung erreicht wird.

29. Vorrichtung nach Anspruch 28, umfassend ein Mittel (49, 86, 86') zum Ablesen von zwei inkrementalen Skalen (9, 11), die sich in jeweilige Koordinatenrichtungen des Speicherelements erstrecken, um in beiden Koordinatenrichtungen Bewegungsinkremente zu erzeugen, die unter Verwendung der Skalen (9, 11) gemessen werden.

30. Vorrichtung nach Anspruch 28 oder 29, in welcher das Ablesemittel (49, 86, 87) und das Steuermittel (107) zur Messung von Bewegungsinkrementen von so kleiner Dimension auf der Skala (bzw. auf den Skalen) (9, 11) im Vergleich zu einer Dimension einer der Flächen ausgebildet sind, dass es möglich ist, das Licht auf irgendeine einer Mehrzahl von Flächen in einer zweidimensionalen Matrix von Bereichen innerhalb des Speicherbereiches zu richten.

31. Vorrichtung nach Anspruch 28, 29 oder 30, umfassend ein Messwandler-Mittel (86, 87) zum Ablesen einer inkrementalen Skala, die sich entlang einer Randgegend des Elementes erstreckt.

32. Vorrichtung nach Anspruch 31, bei welcher das Messwandler-Mittel (86, 87) einen Moiré-streifen-Messwandler zum Ablesen von optisch lesbaren imkrementalen stellungsangebenden Elementen umfasst.

33. Vorrichtung nach Anspruch 31 oder 32, wenn dieser vom Anspruch 29 abhängig ist, welche Vorrichtung ein zusätzliches Messwandler-Mittel (86', 87') zum Ablesen der anderen inkrementalen Skala umfasst.

34. Vorrichtung nach Anspruch 33, bei welcher das zusätzliche Messwandler-Mittel (86', 87') vom lichtrichtenden Mittel getragen wird.

35. Vorrichtung nach einem der Ansprüche 28 bis 34, umfassend ein Datenablesemittel (48) zum Ablesen von absoluten stellungsangebenden Daten aus einer Spur des Speicherelements, die sich in eine Koordinatenrichtung erstreckt und eine Reihe von numerischen absoluten Adressenwerten definiert.

36. Vorrichtung nach Anspruch 35, bei welcher das lichtrichtende Mittel (56, 60) ein optisches System umfasst, durch welches die absoluten stellungsangebenden Daten auf das Datenablesemittel (48) abgebildet werden.

37. Vorrichtung nach einem der Ansprüche 28 bis 36, bei welcher das Steuermittel so ausgebildet ist, dass es bewirkt, dass das Ablesemittel zusätzlich zu den absoluten und inkrementellen Zugriffsdaten Daten von einer Datenspur (8) abliest.

38. Vorrichtung nach Anspruch 37, bei welcher das Steuermittel in Abhängigkeit von Indexierungdaten betätigbar ist, die von der zusätzlichen Datenspur (8) des Specherelements abgelesen werden, wobei die Indexierungdaten im Zweikoordinatensystem Adressen definieren, die jeweiligen Teilen der Indexierungdaten entsprechen und die Koordinaten der Sollfläche aus diesen Indexierungdaten mittels vom Eingabemittel definierter Daten erhalten werden.

39. Vorrichtung nach einem der Ansprüche 28 bis 38, umfassend Fühlmittel (57, 48) zum Abtasten einer sich in eine erste Koordinatenrichtung eines Speicherelements erstreckende Spur (7) des Speicherelements während der Betätigung des Antriebmittels in einer ersten, bestimmungsgemäss mit der ersten Koordinatenrichtung übereinstimmenden Wirkrichtung, wobei das Steuermittel betätigbar ist, um jeden Fehler zwischen der ersten Koordinatenrichtung und der ersten Wirkrichtung festzustellen und zu speichern, um ihn zur Einführhrung eines entsprechenden Ausgleiches in die Adressenwerte zur darauffolgenden Ortung der Sollflächen (5) zu verwenden.

40. Vorrichtung nach Anspruch 39, bei welcher das Fühlmittel eine Detektoranordnung (48) umfasst, die mit einer Reihe von Detektoren versehen ist, welche so angeordnet sind, dass die Spur (7) des Speicherelements während der Abtastung auf die Anordnung abgebildet werden kann, wobei das Abbild dieser Spur sich schräg zur Richtung der Reihe von Detektoren bewegt, wodurch jeder auftretende Fehler in Abhängigkeit von Änderungen der einzelnen Detektoren, auf welche die Spur des Speicherelements während der Abtastung abgebildet wird, festgestellt wird.

41. Vorrichtung nach einem der Ansprüche 28 bis 40, bezogen auf ein Speicherelement, das mit Zugriffsdaten für den Betrieb in Rotation formatiert ist, wobei das antriebsmittel betätigbar ist, um relative Winkel- und Radialbewegungen zu erzeugen.

42. Vorrichtung nach Anspruch 41, wenn dieser vom Anspruch 39 abhängig ist, zur Verwendung mit einem Speicherelement bestimmt, bei welchem die Koordinaten Polarkoordinaten sind, wobei die erste Wirkrichtung entlang einem kreisförmigen Pfad liegt, der im wesentlichen koaxial zum Koordinatensystem ist, und wobei das Antriebsmittel eine zweite Wirkrichtung aufweist, die in bezug auf das Koordinatensystem im wesentlichen radial verläuft.

43. Vorrichtung nach Anspruch 39, 40 oder 42, oder nach Anspruch 41, wenn dieser vom Anspruch 39 abhängig ist, bei welcher das Abtastmittel (48) so angeordnet ist, dass es die Spur (7) des Speicherelements mittels eines optischen Systems (57) des lichtrichtenden Mittels abtastet.

44. Vorrichtung nach einem der Ansprüche 28 bis 43, bei welcher das lichtrichtende Mittel ein optisches Mittel (57) zur Abbildung von optischen Daten umfasst, wenn diese in den Flächen des Speicherbereiches enthalten ist.

45. Vorrichtung nach einem der Ansprüche 28 bis 45, bei welcher die Steuermittel zwei Gleichstrom-Analaog-Servomotoren (32, 42) umfassen, wobei ein erster (42) der Motoren zum Antreiben des lichtrichtenden Mittels (49) und der zweite (30) zum Antrieben des Mittels (26, 27) zum Abstützen eines Speicherelement bestimmt und ausgebildet sind.

46. Vorrichtung nach Anspruch 45, wenn dieser vom Anspruch 41 abhängig ist, bei welcher eine Spindel (41) sich in bezug auf die Ablesestelle eines Speicherelements als Sehne erstreckt und mit dem lichtrichtenden Mittel (49) zusammenwirkt, um dieses radial zu einem Speicherelement anzutreiben.

47. Vorrichtung nach Anspruch 45 oder 46, bei welcher das Steuerungsmittelsystem einen Rechenprozessor (107) zum Festlegen von Steuerspannungen für die Motoren (32, 42) aus den vom Speicherelement (1) abgelesenen Positionsdaten und aus den Daten für den Sollwert umfasst.

48. Vorrichtung nach Anspruch 47, bei welcher für mindestens einen der Motoren (32, 42) das Steuermittel eine Grobsteuerung liefert, wenn der Unterschied zwischen dem Istwert und dem Sollwert grösser ist als ein vorgegebener Wert, und eine Feinsteuerung liefert, wenn der Unterschied nicht grösser ist als dieser Wert, wobei die Grobsteuerung betätigbar ist, um zur Beschleunigung des Motors eine im wesentlichen konstante Antriebsspannung während einer von diesem Unterschied abhängigen Zeit an den Motor anzulegen und danach eine Abbremsspannung von durch den Prozessor gemäss dem Istwert dieses Unterschieds und der Geschwindigkeit des Speicherelements (1) periodisch wiederberechnetem Wert anzulegen, während die Feinsteuerung betätigbar ist, um den Motor in einem Schritt anzutreiben, um einen Restabstand bis zum Sollwert zurückzulegen.

49. Vorrichtung nach Anspruch 48, bei welcher die Abbremsspannung (V) im wesentlichen gemäss der nachfolgenden Gleichung

$$V = \frac{K_1 X^2}{2X_e} - K_2 X - K_3$$

berechnet wird, worin $K_1$, $K_2$ und $K_3$ Konstanten,

$X_e$ der Istwert des Unterschieds und X die mittlere Geschwindigkeit in der vorangehenden Abtastperiode bedeuten.

50. Vorrichtung nach einem der Ansprüche 48 oder 49, unfassend eine Feinsteuerungswirkung bei der Beendigung der Abbremsung, wenn ein Unterschied zwischen den Istwert und dem Sollert verbleibt, wobei die Feinsteuerungswirkung in der Berechnung und der Zuleitung zum Motor von einem Beschleunigungsimpuls und einem Abbremsimpuls besteht, um den Motor in einem Schritt im wesentlichen bis zur Sollage zu bringen, wobei die Dauer der Impulse in Abhängigkeit von den zu diesem Zeitpunkt vorliegenden Unterschieden berechnet wird.

51. Vorrichtung nach einem der Ansprüche 29 bis 50, umfassend ein Fokussiermittel (63, 64) zum einstellen der Position einer belichteten Fläche des Speicherelements in bezug auf das lichtrichtende Mittel, wobei das Fokusiermittel eine einstellbare Flüssiglager-Anordnung zum Abstützen der belichteten Fläche auf eine unter einstellbarem Druck gehaltene Fluidschicht umfasst.

52. Vorrichtung nach Anspruch 51, bei welcher das Flüssiglagermittel zwei Schubplatten (151, 161) umfasst, von denen jede mit einer Öffnung (158) zum Durchlassen des unter Druck gehaltenen Fluids zum Bereich zwischen den Platten versehen ist, wobei die belichtete Fläche (5) sich in diesem Bereich zwischen den Platten befindet, und eine Quelle (166) von unter Druck gehaltenem Fluid umfasst, die zum Speisen der Platten (151, 161) mit diesen verbunden ist, wobei dieser Druck während der relativen Bewegung einstellbar ist.

53. Vorrichtung nach Anspruch 52, bei welcher die Platten übereinander montiert sind, wobei die untere Platte (161) gegen vertikale Bewegung gesichert ist und die obere Platte (151) zur Gewährleistung einer vertikalen Bewegung montiert ist, um die Höhe dieses bereiches zwischen den Platten variieren zu lassen, wenn der Druck eingestellt wird.

54. Vorrichtung nach Anspruch 52, bei welcher die Platten übereinander in fester vertikaler Lage montiert sind und die den Platten zugeführten Drucke während der relativen Bewegung separat einstellbar sind.

55. Vorrichtung nach einem der Ansprüche 51 bis 54, umfassend ein Mittel zum Einstellen der unter Druck gehaltenen Fluidschicht in Abhängigkeit der relativen Position des Speicherelements (1) und des lichtrichtenden Mittels (49), um Änderungen der Länge des optischen Weges durch Änderungen dieser relativen Lage zu kompensieren.

**FIG. 1.**

FIG.2.

FIG. 3.

*FIG.4.*

*FIG.5.*

*Fig.6.*

FIG. 7.

FIG. 8.

0 033 240

FIG. 9.

Fig. 10.

FIG.11.

FIG.12.

FIG. 13.

11

FIG. 14.

FIG. 15.

FIG. 16.